(19) **Europäisches Patentamt** / **European Patent Office** / **Office européen des brevets**

(11) **EP 4 679 876 A1**

(12) # EUROPEAN PATENT APPLICATION

(43) Date of publication:
**14.01.2026 Bulletin 2026/03**

(21) Application number: **25188527.3**

(22) Date of filing: **09.07.2025**

(51) International Patent Classification (IPC):
**H04W 12/128** (2021.01)   **H04M 15/00** (2024.01)
**H04M 3/436** (2006.01)

(52) Cooperative Patent Classification (CPC):
**H04W 12/128; H04M 3/2281; H04M 15/47;**
H04M 3/436; H04M 2203/6027

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **09.07.2024 IN 202441052535**
**07.07.2025 US 202519261905**

(71) Applicant: **McAfee, LLC**
**San Jose, CA 95002 (US)**

(72) Inventors:
- **AGARWAL, Ayush**
  **854301 Purnia (IN)**
- **SRIVASTAVA, Himanshu**
  **560037 Bangalore (IN)**

- **NALLURI, Srikanth**
  **560017 Bangalore (IN)**
- **KULKARNI, Dattatraya**
  **560085 Bangalore (IN)**
- **JAIN, Shashank**
  **560037 Bangalore (IN)**
- **DATTATHRANI, Sai**
  **560076 Bangalore (IN)**
- **SAHOO, Neha**
  **700150 Kolkata (IN)**
- **BALAMURUGAN, Purushothaman**
  **637101 Salem (IN)**

(74) Representative: **Maiwald GmbH**
**Engineering**
**Elisenhof**
**Elisenstrasse 3**
**80335 München (DE)**

(54) **PHASED FRAUDULENT CALL DETECTION**

(57)    A system and method for detecting fraudulent call activity include segmenting an ongoing voice call between a user and a second party into discrete segments while the call is in progress. The method analyzes respective discrete segments and assigning per-segment weighted fraud scores, where each weighted fraud score accounts for the weighted fraud score of a previous segment. Based on these per-segment weighted fraud scores, the method determines that the voice call is likely a fraudulent call. After making this determination, the method provides a human-perceptible warning to the user before the user discloses sensitive user data.

EP 4 679 876 A1

## Description

### Cross Reference to Related Applications

This Application claims priority to Indian Provisional Application 202441052535, titled "Fraudulent Call Detection," filed July 9, 2024, which is incorporated herein by reference.

### Field of the Specification

This specification relates to the field of consumer security, and more particularly, though not exclusively, to a system and method for multi-staged fraudulent call detection.

### Background

Fraudulent calls, including scams, phishing attempts, spam, and other deceptive practices, pose a significant concern for consumers. These calls can be inconvenient time wasters but also lead to serious consequences such as financial losses, compromised personal data, and online security vulnerabilities. The number of scam calls is increasing in both the United States and globally.

### Brief Description of the Drawings

The present disclosure is best understood from the following detailed description when read with the accompanying FIGURES. It is emphasized that, in accordance with the standard practice in the industry, various features are not necessarily drawn to scale, and are used for illustration purposes only. Where a scale is shown, explicitly or implicitly, it provides only one illustrative example. In other embodiments, the dimensions of the various features may be arbitrarily increased or reduced for clarity of discussion. Furthermore, the various block diagrams illustrated herein disclose only one illustrative arrangement of logical elements. Those elements may be rearranged in different configurations, and elements shown in one block may, in appropriate circumstances, be moved to a different block or configuration.

FIGURE 1 is a block diagram of selected elements of a consumer protection ecosystem.
FIGURE 2 is a block diagram of selected elements of a fraudulent call analysis system.
FIGURE 3 is block diagram of selected elements of a call analysis pipeline.
FIGURE 4 is a block diagram of selected elements of a phased telephone conversation.
FIGURE 5 is a flow chart showing selected elements of a fraudulent call detection method.
FIGURE 6 is a block diagram of selected elements of a hardware platform.
FIGURE 7 is a block diagram of selected elements of a system-on-a-chip (SoC).
FIGURE 8 is a block diagram of selected elements of a network function virtualization (NFV) infrastructure.
FIGURE 9 is a block diagram of selected elements of a containerization infrastructure.
FIGURE 10 illustrates machine learning according to a "textbook" problem with real-world applications.

### Summary

A system and method for detecting fraudulent call activity include segmenting an ongoing voice call between a user and a second party into discrete segments while the call is in progress. The method analyzes respective discrete segments and assigning per-segment weighted fraud scores, where each weighted fraud score accounts for the weighted fraud score of a previous segment. Based on these per-segment weighted fraud scores, the method determines that the voice call is likely a fraudulent call. After making this determination, the method provides a human-perceptible warning to the user before the user discloses sensitive user data

### Embodiments of the Disclosure

The following disclosure provides many different embodiments, or examples, for implementing different features of the present disclosure. Specific examples of components and arrangements are described below to simplify the present disclosure. These are, of course, merely examples and are not intended to be limiting. Further, the present disclosure may repeat reference numerals and/or letters in the various examples. This repetition is for the purpose of simplicity and clarity and does not in itself dictate a relationship between the various embodiments and/or configurations discussed. Different embodiments may have different advantages, and no particular advantage is necessarily required of any embodiment.

### *Overview*

In an illustrative example of a fraudulent call, the fraudster first tries to establish credibility and trust with the caller, creates a sense of urgency or greed, and then gradually tries to gather sensitive information. The scam may be built around typical events for human users, and can generate a sense of greed and urgency by replicating recent user activities. This manipulative approach mailer victims into seemingly genuine scenarios, ultimately leading them to disclose sensitive information.

Some existing solutions help users avoid scam calls by alerting them to incoming calls from known or suspected spam, scam, fraud, or untrustworthy numbers. Data about these numbers may be collected or crowd sourced from publicly available databases. However, fraudsters often rotate, recycle, or lease phone numbers temporarily, making it difficult for existing systems to keep up. This can allow recycled numbers to bypass current safeguards.

This disclosure provides various embodiments for identifying fraudulent calls. These methods involve segmenting calls into short intervals, recognizing recurring patterns in fraudulent calls, detecting artificial voices (e.g., AI or pre-recorded), inferring the fraudster's intent, and offering real-time feedback in the course of a live conversation.

The present specification provides a solution for on-the-fly fraudulent call detection during an ongoing audio call or voice conversation. Upon analyzing an ongoing call and determining that it is likely fraudulent, the system may provide an advisory that enables the user to recognize potentially fraudulent or deceptive conversations. This empowers the user to make informed decisions and be less likely to be a victim of a scam.

Embodiments of the present specification provide progressive analysis of the ongoing conversation, offering feedback as the call progresses. The system may divide the conversation into short segments (e.g., each segment being a few seconds long, such as 10 to 30 seconds). After a few seconds of conversation, the system analyzes the content and assigns a rolling score to indicate the likelihood of fraud for that segment. As the conversation evolves, the system can gain increased confidence either that the call is genuine or that the call is fraudulent.

To improve confidence, the system considers scores from previous segments when evaluating the current one. This allows the system to understand the conversation's overall pattern and how fraud risk evolves.

Furthermore, the system analyzes conversation content and caller behavior. It may detect malicious behavior by comparing the conversation's progression to patterns common in fraudulent calls. For example, typical phases of a fraudulent call might include:

> a. A first phase where the caller introduces himself and describes his purpose;
> b. A second phase where the caller attempts to establish credibility by building trust and rapport.
> c. A third phase where the caller exerts pressure through fabricated problems, false information, or appeals to sympathy, urgency, and greed.
> d. A fourth phase involves the caller attempting to collect monetary account information, personally identifying information (PII), or other sensitive information.

Thus, detecting a fraudulent call involves identifying conversations that follow a multiphase pattern. The presence of this pattern itself can indicate fraudulent intent. Furthermore, the system can adapt as fraudsters modify their tactics. For example, they may introduce new phases or alter existing ones. In such cases, a machine learning (ML) system trained on a dataset of fraudulent calls can enhance ongoing detection.

The system disclosed herein may also pay attention to the victim's responses. The system assesses whether the victim seems gullible or easily tricked during conversation. The system may also watch for signs of confusion in the victim's responses, as this may indicate a higher risk of the victim falling for the scam. The system may also have access to a user profile, which can provide contextual information about the targeted caller, such as age, education level, business background, financial context, or other useful information. The user may provide this information voluntarily, or it may be inferred from public or other available records, as appropriate.

The foregoing can be used to build or embody several example implementations, according to the teachings of the present specification. Some example implementations are included here as nonlimiting illustrations of these teachings.

There is disclosed herein a system and method for detecting fraudulent call activity. Aspects of the method for detecting fraudulent activity on a user device involve segmenting an ongoing voice call between a user and a second party into discrete segments while the call is in progress. The method further includes analyzing respective discrete segments and assigning per-segment weighted fraud scores, where each weighted fraud score accounts for the weighted fraud score of a previous segment. Based on these per-segment weighted fraud scores, the method determines that the voice call is likely a fraudulent call. After making this determination, the method provides a human-perceptible warning to the user before the user discloses sensitive user data.

Additional aspects of the method include providing the human-perceptible warning in various forms, such as an audible, visual, or haptic warning. The voice call being analyzed can be an incoming voice call, and it may originate from an unknown phone number or a known phone number that is listed in the user's electronic address book or contact list.

The discrete segments of the voice call can be of equal length to one another or of variable length, with the variable length determined by breaks in speech. Analyzing each discrete segment can involve converting the segment to text and analyzing it via a large language model (LLM) to identify textual indicia of deceit. Alternatively, analysis may involve examining vocal cues of the second party to detect fake voice indicators or assessing vocal cues of both the user and the second party to identify indicia of heightened emotion.

Further aspects of determining that a voice call is likely fraudulent include identifying a multi-phase call structure common to fraudulent calls, which may comprise phases such as introduction and purpose, building credibility, applying pressure, and a payoff phase. The sensitive user data that the method aims to protect can include personally identifying information (PII), user credentials, account data, or money access.

Embodiments of an apparatus for performing these methods include means for segmenting the voice call, analyzing discrete segments, assigning weighted fraud scores, determining the likelihood of a fraudulent call, and providing warnings. Such an apparatus may comprise a processor and a memory, with the memory containing machine-readable instructions that, when executed, cause the apparatus to perform the method. The apparatus can be realized as a computing system, including various types such as desktop computers, workstations, laptop computers, notebook computers, netbooks, tablet computers, convertible tablet computers, smart phones (including Android phones and iPhones), Windows phones, or servers.

In some embodiments, the server may include a guest infrastructure to realize server functions, with this infrastructure potentially comprising virtualization or containerization. The computing apparatus can also be implemented as a gateway.

Computer-readable media can store instructions that, when executed, implement these methods or realize such apparatuses. These media can include tangible, nontransitory computer-readable storage media having stored thereon executable instructions to instruct a processor circuit to perform the method steps, including segmenting voice calls, analyzing segments for fraud indicators, and providing user warnings.

The computing apparatus comprises a hardware platform with a processor circuit and memory. The memory stores instructions that direct the processor circuit to segment ongoing voice calls into discrete parts. These parts are analyzed to assess the likelihood of fraudulent activity using weighted scores based on previous segments. The apparatus determines if a call is likely fraudulent and provides human-perceptible warnings before sensitive data disclosure.

Variations in the computing apparatus include differences in the type of human-perceptible warning provided (audible, visual, or haptic), the nature of the voice call (incoming, from known or unknown numbers), segment length (equal or variable based on speech breaks), analysis techniques (text conversion and LLM analysis, vocal cue examination for fake voices or heightened emotion), and the types of sensitive user data protected (PII, credentials, account data, money access).

The computing apparatus can take many forms, including desktop computers, workstations, laptops, notebooks, netbooks, tablets, convertible tablets, smartphones (including Android phones, iPhones, and Windows phones), servers with optional guest infrastructure for virtualization or containerization, and gateways. Each of these apparatuses can be configured to perform the method steps related to fraud detection during voice calls and provide appropriate warnings to protect user data.

### Detailed Description of the Drawings

A system and method for phased fraudulent call detection will now be described with more particular reference to the attached FIGURES. It should be noted that throughout the FIGURES, certain reference numerals may be repeated to indicate that a particular device or block is referenced multiple times across several FIGURES. In other cases, similar elements may be given new numbers in different FIGURES. Neither of these practices is intended to require a particular relationship between the various embodiments disclosed. In certain examples, a genus or class of elements may be referred to by a reference numeral ("widget 10"), while individual species or examples of the element may be referred to by a hyphenated numeral ("first specific widget 10-1" and "second specific widget 10-2").

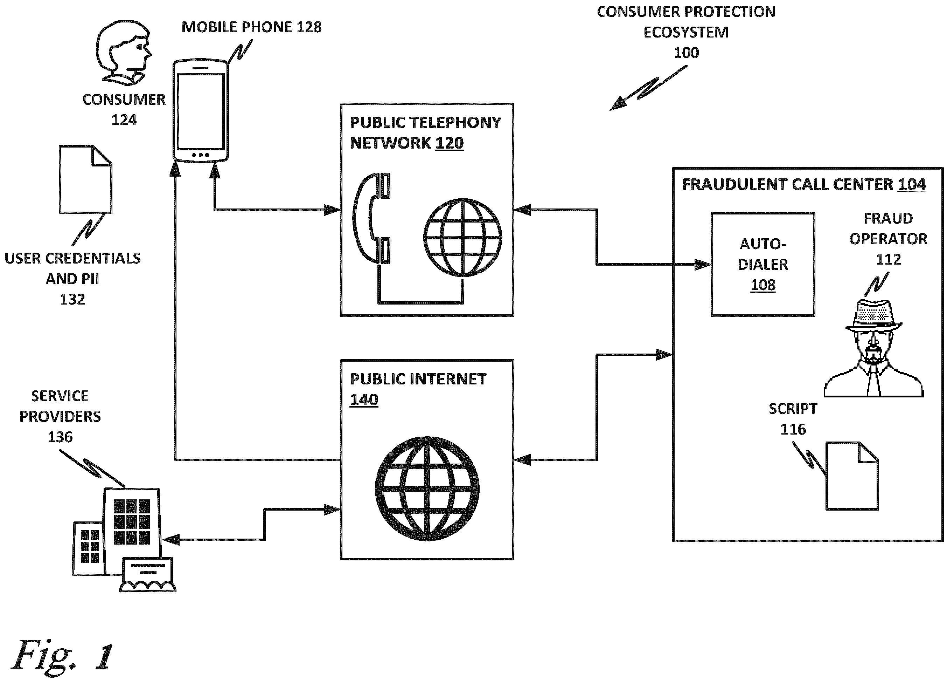

FIGURE 1 is a block diagram of a computer consumer protection ecosystem 100. The ecosystem includes a consumer 124 operating a mobile device 128. Consumer 124 has access to user credentials and PII 132, which may include, for example, banking information, passwords, social security numbers, and electronic access to money, accounts, and services. These data points are examples of "sensitive user data" encompassed within PII 132.

A fraudulent call center 104 may employ multiple fraud operators 112 who contact users via an autodialer 108. The autodialer operates on the public telephone network 120 to call mobile phones 128, allowing fraud operators 112 to speak with users (e.g., consumers 124). Fraud operators 112 may attempt to gain access to PII 132 by contacting consumers 124 via mobile phone 128. During a call, fraud operators 112 may use a script 116 to guide their interactions with consumers 124 and ultimately obtain PII 132.

Consumer 124 may possess varying levels of wariness or sophistication. A well-trained or highly suspicious consumer 124 might recognize fraudulent call characteristics and avoid PII loss. Conversely, a less sophisticated or more gullible consumer 124 could be susceptible to fraud operator 112 using script 116 to gain access to PII 132.

A consumer 124 subscribes to a protection service provided by service provider 136). The service provider 136 may be a security services provider, such as McAfee or another suitable alternative. A mobile phone 128 accesses service provider 136 via the public internet 140. Service provider 136 may offer a cloud-based service that complements local computing on mobile phone 128.

When autodialer 108 places a call to mobile phone 128 through the public telephone network 120, software on mobile phone 128 may recognize that the call is coming from an unknown or untrusted number. Even if the number does not have a crowd-sourced known fraudulent reputation, the software may recognize that consumer 124 may be in danger of a fraudulent call. In this case, mobile phone 128 may operate its consumer protection engine to analyze the call for indicia of fraud or deceit. In some cases, the protection engine may operate even if the incoming phone number is in the user's contact list or phone boook. Some frauds are "long cons," in which the fraudster tries to gain trust over time, and thus may have previously contacted the user. Furthermore, even supposedly-trusted contacts, such as family members or alleged friends may try to take advantage of vulnerable users, such as elderly or disabled users. In some cases, a sensitivity level can be selected as a user option, to provide a tradeoff between protection and false positives. In other cases, a sensitivity level may be suggested based on the user's inherent risk profile (e.g., age, background, education, or similar).

The call analysis may occur in real-time during the call to identify fraudulent intent and warn the user (consumer 124) before personally identifiable information (PII) 132 is compromised. Mobile phone 128 may access service provider 136 via public Internet 140 to enhance its local analysis, such as by using deep neural networks (DNN), large language models (LLM), or other services not practical to run on mobile phone 128. If mobile phone 128 determines that the call is likely fraudulent, it may provide a warning to consumer 124 (e.g., visible, audible, and/or haptic), autonomously terminate the call under certain configurations, or take other remedial action against fraudulent call center 104.

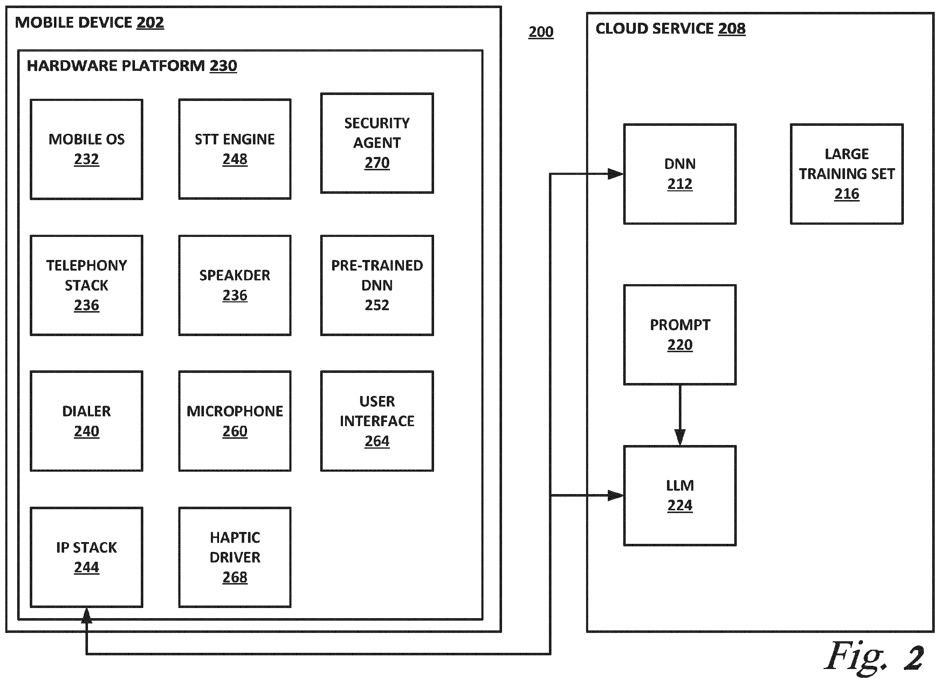

FIGURE 2 is a block diagram of selected elements of a fraudulent call analysis ecosystem 200. Fraudulent call analysis ecosystem 200 may operate with a mobile device 202, running on a hardware platform 230. Hardware platform 230 provides the necessary hardware, firmware, and software services to interact with a human user.

Hardware platform 230 includes a mobile operating system 232, which may be for example Android, iOS, Windows mobile edition, or any other suitable operating system for mobile device 202.

A telephony stack 236 provides the hardware and software to interact with a public telephone network, such as a cellular or digital communication network. This may include, for example, a mobile telephone transceiver and software to make voice calls. A dialer 240 may include hardware and software to place outgoing calls to the mobile telephone network. Telephony stacked 236 also has the capacity to receive incoming calls.

An Internet Protocol (IP) stack 244 may include TCP/IP services to communicate with the Internet and with network-based services. IP stack 244 may provide a connection to cloud service 208, which may provide some supplemental services.

Mobile device 202 may also include a speech-to-text (STT) engine 248. STT engine 248 may convert ongoing calls to text in real-time or near-real-time, enabling processing by a large language model (LLM).

A speaker 236 provides an interface for the human user to hear calls and can be manipulated by security agent 270 to deliver audible warnings if the call is suspected to be a scam.

Microphone 260 provides user input to the call, and can be used as an interface to provide call data to STT engine 248 of security agent 270.

A haptic driver 268 may provide haptic feedback, such as a buzz or shake, if the security agent 270 suspects a scam call.

Security agent 270 may include a pre-trained DNN, which can detect scam calls by recognizing known phases of a scam. Pre-trained DNN 252 can interoperate with cloud services 208, providing access to a larger and more featureful DNN 212. Security agent 270 may also interface with an LLM 224 using a prompt 220 to help detect voice authenticity and scam-like behavior. Both DNN 212 and LLM 224 can be trained on a large training set 216.

A user interface 264 within security agent 270 may provide visual representations of the call status and analyze its legitimacy. Security agent 270 may launch user interface 264 under uncertain conditions, such as calls from unknown or untrusted numbers.

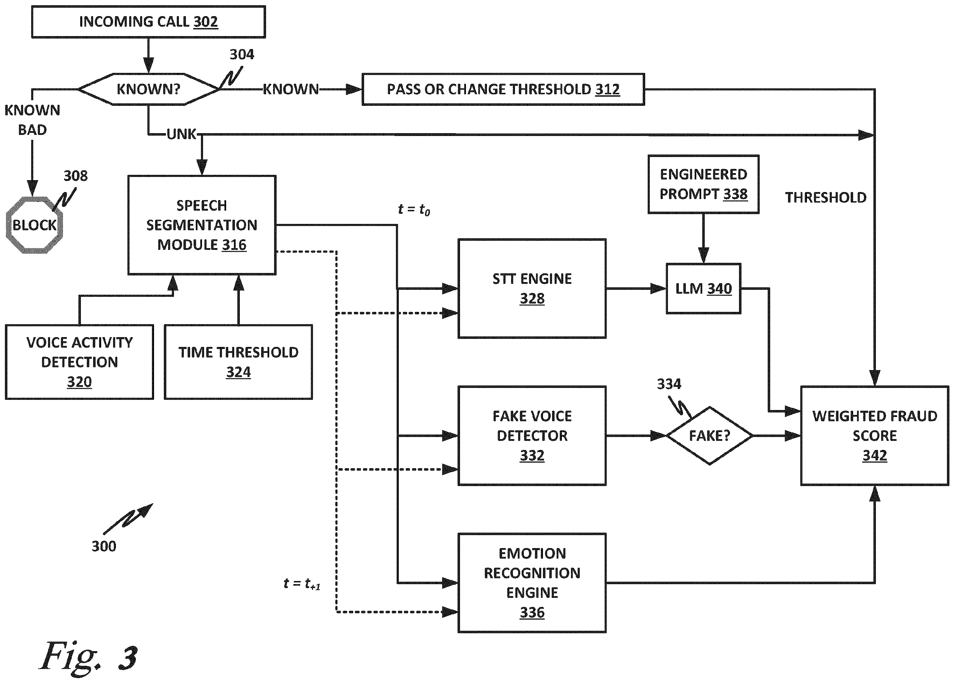

FIGURE 3 is a block diagram of a processing pipeline 300 for a consumer protection ecosystem. Processing pipeline 300 starts with an incoming call 302.

In decision block 304, the system determines whether the caller is known. Notably, the fact that the incoming call is from a person with a known telephone number (e.g. in the user's contacts list) does not necessarily imply that the caller is trustworthy. One benefit of the present specification is that fraudulent or high-pressure tactics can be detected even from known callers. Some users can be defrauded even by supposedly trusted friends or family members. However, in some embodiments a user may prefer not to screen every call, and may elect to greenlight certain highly trusted callers such as a spouse, immediate family members, or highly trusted advisors. In other embodiments, greenlighting may not be provided, as even trusted confidants can abuse their positions to defraud the user.

If a caller is greenlit due to a known good reputation (block 312), they may receive an initial pass, which can be factored into the weighted fraud score (342). In some cases, the system may use heuristics to adjust the threshold for a caller over time. Callers with a history of trustworthy interactions may have a higher detection initiation threshold compared to other callers.

If the incoming call originates from a known malicious, fraudulent, scam, or phishing phone number in block 304, then in block 308 the call may be directly blocked without requiring further interaction.

Greater machine intelligence may be applied in cases where the caller has an unknown or untrusted (but not known bad) reputation. In this case, the unknown reputation may be provided as an initial value for a weighted fraud score 342, indicating that the caller is simply unknown.

Fraudulent call detection begins with a speech segmentation module 316. Speech segmentation module 316 samples the conversation in real time at intervals of *t* seconds and then processes the conversation using content analysis, fake voice detection, emotion recognition, and other processing steps. In various embodiments, *t* may be selected to provide both reasonable responsiveness and large enough segments to be useful. In some embodiments, *t* may be between 3 and 10 seconds seconds or between 3 and 30 seconds.

A time threshold 324 determines the speech segmentation module 316's sampling period. In some embodiments, the time threshold 324 is dynamic and influenced by voice activity detection 320. For example, during pauses or low conversation density, voice activity detection 320 may extend the time threshold 324 to capture more useful information.

Speech Segmentation Module 316 samples the conversation in real time at intervals of *T* seconds and then processes the conversation using content analysis, fake voice detection, emotion recognition engine 336.

STT engine 328 converts the speech segment to text that is usable by an LLM 340. LLM 340 receives the content of the transcribed speech segment, (which may be tagged according to voices, so that LLM 340 can differentiate between the caller and the callee). An engineered prompt 338 instructs LLM 340 to analyze the speech segment and use contextual information from the conversation to analyze the call for indicia of fraud. The context may include, for example, the identity of the caller, whether the caller is known or unknown, a profile of the callee (which may provide indicia of vulnerability or gullibility), time of day, and other contextual information. Engineered prompt 338 may also instruct the LLM 340 to analyze each segment of the conversation and generate a fraud score for each segment. LLM 340 may receive the call segments and rolling updates, so that it is aware of the full content and context of the call throughout the operation.

LLM 340 may also be directed to extract the intent of the caller from the conversation by using progressive analysis of the ongoing conversation. LLM 340 may aid in detecting the current phase of the conversation based on the following factors by way of illustrative and nonlimiting example:

    a. The reason behind the call;
    b. Whether the caller is trying to build credibility;
    c. Whether the caller is generating a sense of greed and urgency;
    d. Whether the caller is seeking PII or money, or if they are trying to create a scenario like the last day an offer is available, an artificial deadline, or threatening imminent financial loss as means of pressuring the callee.

LLM 340 may respond to engineered prompt 338 by creating a structured output. The structured output may include:

    a. Caller details (e.g., whether the caller is known, and any known reputation);

    b. Caller intent-the inferred intent of the caller;
    c. Fraud score-an LLM-generated fraud score for each conversation segment. Labeled FS1 (fraud score 1), FS1 is input to weighted fraud score 342. FS1 may have a range such as 0% to 100%, 0 to 10, or 0 to 1.

Fake voice detector 332 may analyze the call segment to determine whether the caller's voice appears to be fake (e.g., pre-recorded or AI generated). A pre-recorded or AI generated caller can be a strong indication of a robocall, with much higher likelihood of having fraudulent intent.

In decision block 334, the fake voice detector 332 determines if the caller's voice appears fake and provides a fraud score (FS2). FS2 can be a simple Boolean value (e.g., 0 for genuine and 1 for fake, or vice versa). A "fake" designation as 1 may be useful because it numerically increases a composite fraud score.

Emotion recognition engine 336 uses a DNN (local and/or remote) to detect emotions of both the caller and callee. This can help determine if either party is tense, if a high-pressure or high-emotion situation is developing, and if the situation may affect the callee's judgment. Emotion recognition engine 336 provides a fraud score (FS3). A final weighted fraud score (342) combines FS1, FS2, and FS3 using methods such as summation, multiplication, bucketized values, or other weighting/combination algorithms.

Weighted fraud score 342 in some embodiments may be displayed as a fraud indicator on a graphical user interface.

As illustrated in FIGURE 3, after time t=t0, the system feeds back weighted fraud score 342 and analyzes the speech segment at t=t+1. Weighted fraud score 342 may be a rolling score updated as the conversation progresses.

The system may use weighted fraud score 342 to provide user advice based on the conversation. LLM 340 may generate human-readable plaintext recommendations for responding to the call, such as hanging up, asking follow-up questions if the call seems legitimate, or offering other appropriate advice.

Processing pipeline 300 goes beyond simple keyword spotting and blocking known spam phone numbers. Keywords can be modified over time, and phone numbers can be spoofed or changed frequently. Processing pipeline 300 leverages generative AI (GAI) to analyze conversations and the speaker's intent to identify fraudulent calls.

The system and method monitor calls from start to finish, progressively determining the fraud score. This prevents false alerts based on only the initial seconds of a call, when fraud detection may be premature. However, the system can alert the recipient during the call (e.g., before Personally Identifiable Information is compromised), enabling them to take appropriate remedial action as necessary.. The present system may update the weighted fraud score 340 as the call progresses, providing users with timely alerts. User interfaces may offer in-call advisories and audible, haptic, or visual warnings if fraud is detected.

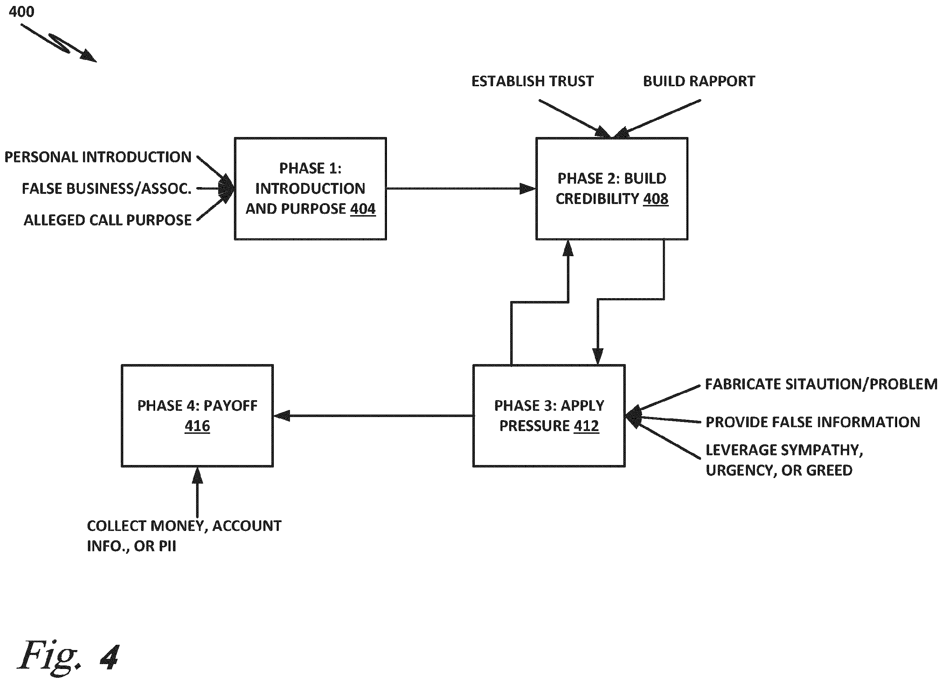

**FIGURE 4** is a block diagram of a phased phone conversation 400. Phased conversation 400 illustrates various phases of a potentially fraudulent call.

Phase 1 404 includes an introduction and stated purpose. The caller may introduce themselves, present a potentially false business or affiliation, and state the call's purpose. For example, the caller might say, "Hi, my name is Mike Jones. I'm calling from the Beneficial Association for Fallen State Troopers. We provide scholarships to children of peace officers killed in the line of duty. I was hoping you could give me a few minutes to discuss how you might help these families."

In phase 2 408, the caller may attempt to establish credibility with the callee. This may involve providing false credentials, fabricating a backstory (e.g., "This cause is very important to me because I am the son of a fallen state trooper. My father was killed on State Highway 306..."), or pretending to share common ground with the callee to foster a trusting relationship.

In phase 3, 412, the caller may apply pressure. For example, they might fabricate a situation or problem (e.g., "Johnny Simmons just applied and got accepted to three top universities, but his mom calls me every night crying because she doesn't know how she's going to pay for it"). The caller may also provide false information, leverage sympathy, urgency, or greed. For example, in a stock scam, they might say, "This investment opportunity will not last. I am only authorized to offer you this opportunity if you lock in today."

In phase 4 416, if the scammer is successful, they receive a payoff. This may include collecting money, account information, or other personally identifiable information (PII) or sensitive user data.

The four-phase structure is detectable, and many scam or fraud calls follow a similar structure. The presence of this structure may indicate fraudulent intent.

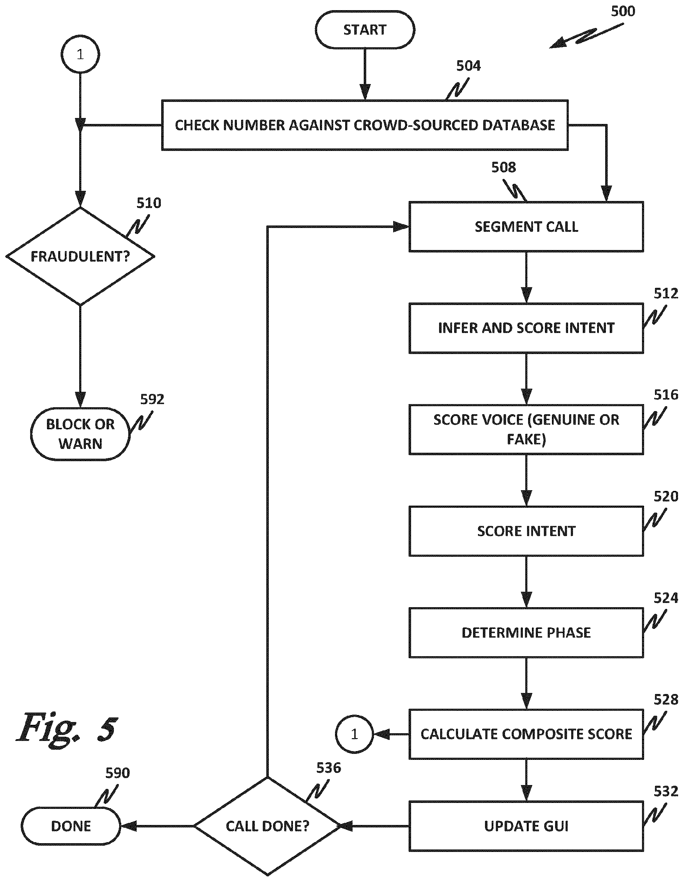

**FIGURE 5** is a flowchart of a method 500 of analyzing an ongoing call (or completed phone call as appropriate, e.g., in the case of a "post-mortem" analysis of a call).

Beginning at block 504, an incoming call is received. The system then checks the incoming phone number against a crowd-sourced database of known phone numbers.

In decision block 510, the system determines if the call originates from a known or suspected fraudulent source.

If the call originates from a known or suspected fraudulent source, terminal block 592 warns the user and/or blocks the call. Upon termination of the call, the method concludes for that phone call.

Returning to decision block 510, if the number is not identified as fraudulent or was not found in a known database of trusted or untrusted phone calls (from decision block 504), the method proceeds.

In block 508, the system segments the call using a fixed or dynamic segment length.

In block 512, the system infers and scores the call's intent using GAI analysis.

In block 516, the system scores the voice for genuineness. If the caller appears to be a genuine human but uses an artificially ingratiating or supplicating tone, the voice may be contextually fake because the human is not speaking with genuine intent.

In block 520, voice data is converted to text. An LLM then analyzes the text of the ongoing conversation to determine the caller's intent within the specific call segment.

In block 524, the system determines if the call follows a known multiphase fraudulent call structure (e.g., a four-phase structure). If so, it identifies the call's current phase.

In block 528, the system calculates a composite score for fraud or genuineness.

Following on-page connector 1 back to decision block 510, if the system determines with high confidence that the call is fraudulent, the system may block, terminate, or warn the user in block 592. If the system determines with intermediate confidence that the call may be fraudulent, the system may warn the user without terminating the call. If a high confidence fraud determination is not made in block 510, control returns to block 508 to analyze the next segment of the call.

Returning to block 528, the composite score for the current call segment is calculated. In block 532, the system updates a graphical user interface, displaying call information to the user.

If the call is not complete, the method proceeds to block 508 in decision block 536 and analyzes the next segment of the call.

If the call is complete, the method ends at block 590.

Two memories, 604-1 and 604-2, are connected to PROC0 602-1 and PROC1 602-2, respectively. For example, each processor is shown connected to its memory in a direct memory access (DMA) configuration. Other memory architectures are possible, including those where memory 604 communicates with a processor 602 via a bus. Examples include connections via a system bus or, in a data center, a remote DMA (RDMA) configuration.

Memory 604 may include any form of volatile or nonvolatile memory including, without limitation, magnetic media (e.g., one or more tape drives), optical media, flash, random access memory (RAM), double data rate RAM (DDR RAM) nonvolatile RAM (NVRAM), static RAM (SRAM), dynamic RAM (DRAM), persistent RAM (PRAM), data-centric (DC) persistent memory (e.g., Intel Optane/3D-crosspoint), cache, Layer 1 (L1) or Layer 2 (L2) memory, on-chip memory, registers, virtual memory region, read-only memory (ROM), flash memory, removable media, tape drive, cloud storage, or any other suitable local or remote memory component or components. Memory 604 may be used for short, medium, and/or long-term storage. Memory 604 may store any suitable data or information utilized by platform logic. In some embodiments, memory 604 may also comprise storage for instructions that may be executed by the cores of processors 602 or other processing elements (e.g., logic resident on chipsets 616) to provide functionality.

In certain embodiments, memory 604 may comprise a relatively low-latency volatile main memory, while storage 650 may comprise a relatively higher-latency nonvolatile memory. However, memory 604 and storage 650 need not be physically separate devices, and in some examples may represent simply a logical separation of function (if there is any separation at all). It should also be noted that although DMA is disclosed by way of nonlimiting example, DMA is not the only protocol consistent with this specification, and that other memory architectures are available.

Certain computing devices provide main memory 604 and storage 650, for example, in a single physical memory device, and in other cases, memory 604 and/or storage 650 are functionally distributed across many physical devices. In the case of virtual machines or hypervisors, all or part of a function may be provided in the form of software or firmware running over a virtualization layer to provide the logical function, and resources such as memory, storage, and accelerators may be disaggregated (i.e., located in different physical locations across a data center). In other examples, a device such as a network interface may provide only the minimum hardware interfaces necessary to perform its logical operation, and may rely on a software driver to provide additional necessary logic. Thus, each logical block disclosed herein is broadly intended to include one or more logic elements configured and operable for providing the disclosed logical operation of that block. As used throughout this specification, "logic elements" may include hardware, external hardware (digital, analog, or mixed-signal), software, reciprocating software, services, drivers, interfaces, components, modules, algorithms, sensors, components, firmware, hardware instructions, microcode, programmable logic, or objects that can coordinate to achieve a logical operation.

Graphics adapter 622 may be configured to provide a human-readable visual output, such as a command-line interface (CLI) or graphical desktop such as Microsoft Windows, Apple OSX desktop, or a Unix/Linux X Window System-based desktop. Graphics adapter 622 may provide output in any suitable format, such as a coaxial output, composite video, component video, video graphics array (VGA), or digital outputs such as digital visual interface (DVI), FPDLink, DisplayPort, or high definition multimedia interface (HDMI), by way of nonlimiting example. In some examples, graphics adapter 622 may include a hardware graphics card, which may have its own memory and its own graphics processing unit (GPU).

Chipset 616 may communicate with bus 628 via an interface circuit. Bus 628 may host various devices, such as a bus bridge 632, I/O devices 635, accelerators 646, communication devices 640, and a keyboard and/or mouse 638, among others. The hardware platform 600's components can be interconnected in various suitable manners, such as through buses that may employ multidrop bus architectures, mesh interconnects, fabrics, ring interconnects, round-robin protocols, PtP interconnects, serial interconnects, parallel buses, coherent (e.g., cache coherent) buses, layered protocol architectures, differential buses, or Gunning transceiver logic (GTL) buses.

Communication devices 640 can broadly include any communication not covered by a network interface and the various I/O devices described herein. This may include, for example, various universal serial bus (USB), FireWire, Lightning, or other serial or parallel devices that provide communications.

I/O Devices 635 may interface with any auxiliary device connected to hardware platform 600, even if it is not part of the core architecture. A peripheral may provide extended functionality to hardware platform 600 and may or may not be wholly dependent on it. In some cases, a peripheral may be a computing device in its own right. Examples of peripherals include displays, terminals, printers, keyboards, mice, modems, data ports (e.g., serial, parallel, USB, Firewire), network controllers, optical media, external storage, sensors, transducers, actuators, controllers, data acquisition buses, cameras, microphones, speakers, or external storage.

In one example, audio I/O 642 may provide an interface for audible sounds, and may include in some examples a hardware sound card. Sound output may be provided in analog (such as a 3.5mm stereo jack), component ("RCA") stereo, or in a digital audio format such as S/PDIF, AES3, AES47, HDMI, USB, Bluetooth, or Wi-Fi audio, by way of nonlimiting example. Audio input may also be provided via similar interfaces, in an analog or digital form.

Bus bridge 632 may be in communication with other devices such as a keyboard/mouse 638 (or other input devices such as a touch screen, trackball, etc.), communication devices 640 (such as modems, network interface devices, peripheral interfaces such as PCI or PCIe, or other types of communication devices that may communicate through a network), audio I/O 642, a data storage device 644, and/or accelerators 646. In alternative embodiments, any portions of the bus architectures could be implemented with one or more PtP links.

Operating system 606 may be, for example, Microsoft Windows, Linux, UNIX, Mac OS X, iOS, MS-DOS, or an embedded or real-time operating system (including embedded or real-time flavors of the foregoing). In some embodiments, a hardware platform 600 may function as a host platform for one or more guest systems that invoke application (e.g., operational agents 608).

Operational agents 608 may include one or more computing engines, which may include nontransitory computer-readable mediums storing executable instructions. These instructions, when executed by processor 602, enable operational functions. Upon events such as hardware platform 600 booting, a command from operating system 606, a user, or a security administrator, processor 602 may retrieve a copy of the operational agent (or software portions) from storage 650 and load it into memory 604. Processor 602 then iteratively executes the operational agent's instructions to provide the desired methods or functions.

As used throughout this specification, an "engine" includes any combination of one or more logic elements, of similar or dissimilar species, operable for and configured to perform one or more methods provided by the engine. In some cases, the engine may be or include a special integrated circuit designed to carry out a method or a part thereof, a field-programmable gate array (FPGA) programmed to provide a function, a special hardware or microcode instruction, other programmable logic, and/or software instructions operable to instruct a processor to perform the method. In some cases, the engine may run as a "daemon" process, background process, terminate-and-stay-resident program, a service, system extension, control panel, bootup procedure, basic in/output system (BIOS) subroutine, or any similar program that operates with or without direct user interaction. In certain embodiments, some engines may run with elevated privileges in a "driver space" associated with ring 0, 1, or 2 in a protection ring architecture. The engine may also include other hardware, software, and/or data, including configuration files, registry entries, application programming interfaces (APIs), and interactive or user-mode software by way of nonlimiting example.

In some cases, an engine's function is described using terms like "circuit" or "circuitry" to perform a particular function. These terms encompass both the physical circuit and, in the case of a programmable circuit, any instructions or data used for programming or configuration.

Where elements of an engine are embodied in software, computer program instructions may be implemented in programming languages, such as an object code, an assembly language, or a high-level language such as OpenCL, FORTRAN, C, C++, JAVA, or HTML. These may be used with any compatible operating systems or operating environments. Hardware elements may be designed manually, or with a hardware description language such as Spice, Verilog, and VHDL. The source code may define and use various data structures and communication messages. The source code may be in a computer executable form (e.g., via an interpreter), or the source code may be converted (e.g., via a translator, assembler, or compiler) into a computer executable form, or converted to an intermediate form such as byte code. Where appropriate, any of the foregoing may be used to build or describe appropriate discrete or integrated circuits, whether sequential, combinatorial, state machines, or otherwise.

A network interface may communicatively couple a hardware platform to a wired or wireless network or fabric. "Network," as used herein, includes any communicative platform capable of exchanging data or information within or between computing devices. Examples include local networks, switching fabrics, ad-hoc local networks, Ethernet (e.g., as defined by the IEEE 802.3 standard), Fiber Channel, InfiniBand, Wi-Fi, and other suitable standards. This also encompasses Intel Omni-Path Architecture (OPA), TrueScale, Ultra Path Interconnect (UPI) (formerly called QuickPath Interconnect, QPI, or KTI), FibreChannel, Ethernet, FibreChannel over Ethernet (FCoE), InfiniBand, PCI, PCIe, fiber optics, millimeter wave guide, an internet architecture, a packet data network (PDN) offering communications between nodes in a system, local area networks (LANs), metropolitan area networks (MANs), wide area networks (WANs), wireless local area networks (WLANs), virtual private networks (VPNs), intranets, plain old telephone systems (POTS), or any other appropriate architecture or system facilitating communication in a network or telephonic environment, with or without human interaction. A network interface may include one or more physical ports that couple to cables (e.g., Ethernet cables, other cables, or waveguides).

In some cases, components of hardware platform 600 may be virtualized, particularly processors and memory. For example, a virtualized environment may run on OS 606, or OS 606 could be replaced with a hypervisor or virtual machine manager. In this configuration, a virtual machine running on hardware platform 600 may virtualize workloads. This virtual machine may perform essentially all the functions of a physical hardware platform.

Processors can execute any type of instruction associated with data to achieve the operations described in this specification. Processors or cores disclosed herein can transform elements or articles (e.g., data) from one state to another. Some activities outlined herein may be implemented using fixed logic or programmable logic, such as software and computer instructions executed by a processor.

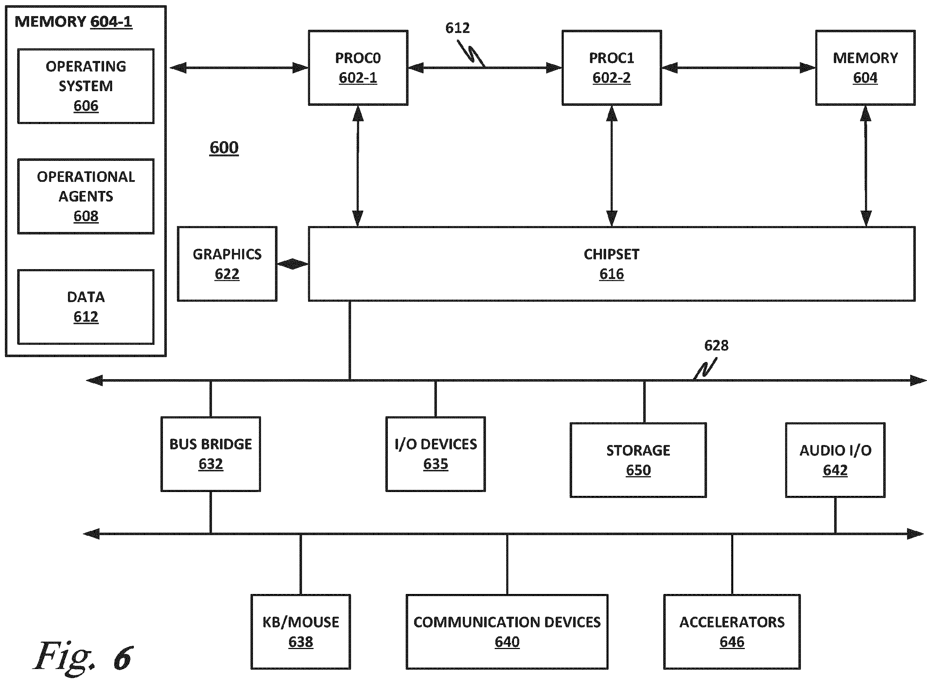

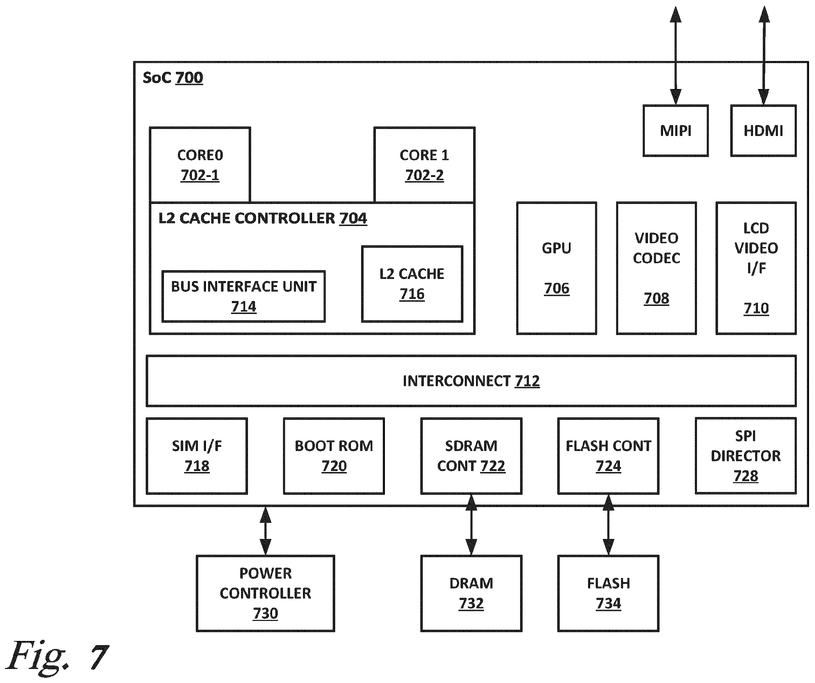

Various components of the system depicted in FIGURE 6 may be combined in a SoC architecture or in any other suitable configuration. For example, embodiments disclosed herein can be incorporated into systems including mobile devices such as smart cellular telephones, tablet computers, personal digital assistants, portable gaming devices, and similar. These mobile devices may be provided with SoC architectures in at least some embodiments. An example of such an embodiment is provided in FIGURE 7. Such an SoC (and any other hardware platform disclosed herein) may include analog, digital, and/or mixed-signal, radio frequency (RF), or similar processing elements. Other embodiments may include a multichip module (MCM), with a plurality of chips located within a single electronic package and configured to interact closely with each other through the electronic package. In various other embodiments, the computing functionalities disclosed herein may be implemented in one or more silicon cores in application-specific integrated circuits (ASICs), FPGAs, and other semiconductor chips.

**FIGURE 7** is a block illustrating selected elements of an example SoC 700. At least some of the teachings of the present specification may be embodied on an SoC 700, or may be paired with an SoC 700. SoC 700 may include, or may be paired with, an advanced reduced instruction set computer machine (ARM) component. For example, SoC 700 may include or be paired with any ARM core, such as A-9, A-15, or similar. This architecture represents a hardware platform that may be useful in devices such as tablets and smartphones, by way of illustrative example, including Android phones or tablets, iPhone (of any version), iPad, Google Nexus, Microsoft Surface. SoC 700 could also be integrated into, for example, a PC, server, video processing components, laptop computer, notebook computer, netbook, or touch-enabled device.

As with hardware platform 600 above, SoC 700 may include multiple cores 702-1 and 702-2. This illustrative example also includes an L2 cache control 704, a GPU 706, a video codec 708, a liquid crystal display (LCD) I/F 710, and an interconnect 712. L2 cache control 704 may include a bus interface unit 714 and a L2 cache 716. Liquid crystal display (LCD) I/F 710 may be associated with mobile industry processor interface (MIPI)/HDMI links that couple to an LCD.

SoC 700 may also include a subscriber identity module (SIM) I/F 718, a boot ROM 720, a synchronous dynamic random access memory (SDRAM) controller 722, a flash controller 724, a serial peripheral interface (SPI) director 728, a suitable power control 730, a dynamic RAM (DRAM) 732, and flash 734. In addition, one or more embodiments include one or more communication capabilities, interfaces, and features such as instances of Bluetooth, a 3G modem, a global positioning system (GPS), and an 802.11 Wi-Fi.

An SoC 700, or other integrated circuits, may utilize intellectual property (IP) blocks to simplify design. An IP block is a modular, self-contained hardware unit that integrates easily into a design. The IC designer can "drop in" the IP block to utilize its functionality and make connections to inputs and outputs.

IP blocks are often considered "black boxes." This means a system integrator using an IP block may not require knowledge of its specific implementation details. IP blocks can be proprietary third-party units, providing no insight into their design for the system integrator.

For example, a system integrator designing an SoC for a smartphone may use IP blocks in addition to the processor core, such as a memory controller, a nonvolatile memory (NVM) controller, Wi-Fi, Bluetooth, GPS, 4G or 5G connectivity, an audio processor, a video processor, an image processor, a graphics engine, a GPU engine, a security controller, and many other IP blocks. Many of these IP blocks have their own embedded microcontrollers.

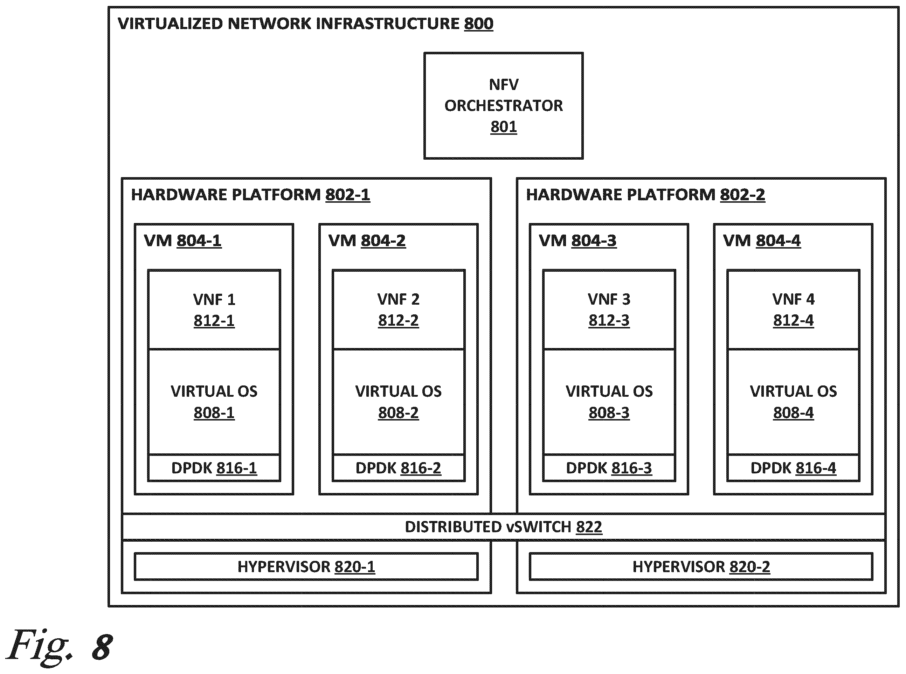

**FIGURE 8** is a block diagram of a NFV infrastructure 800. NFV is an example of virtualization, and the virtualization infrastructure here can also be used to realize traditional VMs. Various functions described above may be realized as VMs, such as the cloud-based functions of FIGURE 2 above. In some cases, detection functions on a mobile device may also be virtualized.

NFV is generally considered distinct from software defined networking (SDN), but they can interoperate together, and the teachings of this specification should also be understood to apply to SDN in appropriate circumstances. For example, virtual network functions (VNFs) may operate within the data plane of an SDN deployment. NFV was originally envisioned as a method for providing reduced capital expenditure (Capex) and operating expenses (Opex) for telecommunication services. One feature of NFV is replacing proprietary, special-purpose hardware appliances with virtual appliances running on commercial off-the-shelf (COTS) hardware within a virtualized environment. In addition to Capex and Opex savings, NFV provides a more agile and adaptable network. As network loads change, VNFs can be provisioned ("spun up") or removed ("spun down") to meet network demands. For example, in times of high load, more load balancing VNFs may be spun up to distribute traffic to more workload servers (which may themselves be VMs). In times when more suspicious traffic is experienced, additional firewalls or deep packet inspection (DPI) appliances may be needed.

Because NFV started out as a telecommunications feature, many NFV instances are focused on telecommunications. However, NFV is not limited to telecommunication services. In a broad sense, NFV includes one or more VNFs running within a network function virtualization infrastructure (NFVI), such as NFVI 800. Often, the VNFs are inline service functions that are separate from workload servers or other nodes. These VNFs can be chained together into a service chain, which may be defined by a virtual subnetwork, and which may include a serial string of network services that provide behind-the-scenes work, such as security, logging, billing, and similar.

In the example of FIGURE 8, an NFV orchestrator 801 may manage several VNFs 812 running on an NFVI 800. NFV requires nontrivial resource management, such as allocating a very large pool of compute resources among appropriate numbers of instances of each VNF, managing connections between VNFs, determining how many instances of each VNF to allocate, and managing memory, storage, and network connections. This may require complex software management, thus making NFV orchestrator 801 a valuable system resource. Note that NFV orchestrator 801 may provide a browser-based or graphical configuration interface, and in some embodiments may be integrated with SDN orchestration functions.

NFV orchestrator 801 may be virtualized rather than a dedicated hardware appliance. It can be integrated into existing SDN systems managed by an operations support system (OSS). This integration may involve cloud resource management systems (e.g., OpenStack) to facilitate NFV orchestration. An NFVI 800 encompasses the hardware, software, and infrastructure necessary for VNF execution. This includes a hardware platform 802 where one or more VMs 804 operate. For instance, hardware platform 802-1 hosts VMs 804-1 and 804-2, while hardware platform 802-2 runs VMs 804-3 and 804-4. Each hardware platform 802 incorporates a hypervisor 820, virtual machine manager (VMM), or similar functionality, potentially running on a minimal native operating system to minimize resource consumption. Hardware platform 802-1 utilizes hypervisor 820-1, and hardware platform 802-2 employs hypervisor 820-2.

Hardware platforms 802 may be or comprise a rack or several racks of blade or slot servers (including, e.g., processors, memory, and storage), one or more data centers, other hardware resources distributed across one or more geographic locations, hardware switches, or network interfaces. An NFVI 800 may also include the software architecture that enables hypervisors to run and be managed by NFV orchestrator 801.

Running on NFVI 800 are VMs 804, each of which in this example is a VNF providing a virtual service appliance. Each VM 804 in this example includes an instance of the Data Plane Development Kit (DPDK) 816, a virtual operating system 808, and an application providing the VNF 812. For example, VM 804-1 has virtual OS 808-1, DPDK 816-1, and VNF 812-1. VM 804-2 has virtual OS 808-2, DPDK 816-2, and VNF 812-2. VM 804-3 has virtual OS 808-3, DPDK 816-3, and VNF 812-3. VM 804-4 has virtual OS 808-4, DPDK 816-4, and VNF 812-4.

Virtualized network functions could include, as nonlimiting and illustrative examples, firewalls, intrusion detection systems, load balancers, routers, session border controllers, DPI services, network address translation (NAT) modules, or call security association.

The illustration of FIGURE 8 shows that a number of VNFs 804 have been provisioned and exist within NFVI 800. This FIGURE does not necessarily illustrate any relationship between the VNFs and the larger network, or the packet flows that NFVI 800 may employ.

The illustrated DPDK instances 816 provide a set of highly-optimized libraries for communicating across a virtual switch (vSwitch) 822. Like VMs 804, vSwitch 822 is provisioned and allocated by a hypervisor 820. The hypervisor uses a network interface to connect the hardware platform to the data center fabric (e.g., a host fabric interface (HFI)). This HFI may be shared by all VMs 804 running on a hardware platform 802. Thus, a vSwitch may be allocated to switch traffic between VMs 804. The vSwitch may be a pure software vSwitch (e.g., a shared memory vSwitch), which may be optimized so that data are not moved between memory locations, but rather, the data may stay in one place, and pointers may be passed between VMs 804 to simulate data moving between ingress and egress ports of the vSwitch. The vSwitch may also include a hardware driver (e.g., a hardware network interface IP block that switches traffic, but that connects to virtual ports rather than physical ports). In this illustration, a distributed vSwitch 822 is illustrated, wherein vSwitch 822 is shared between two or more physical hardware platforms 802.

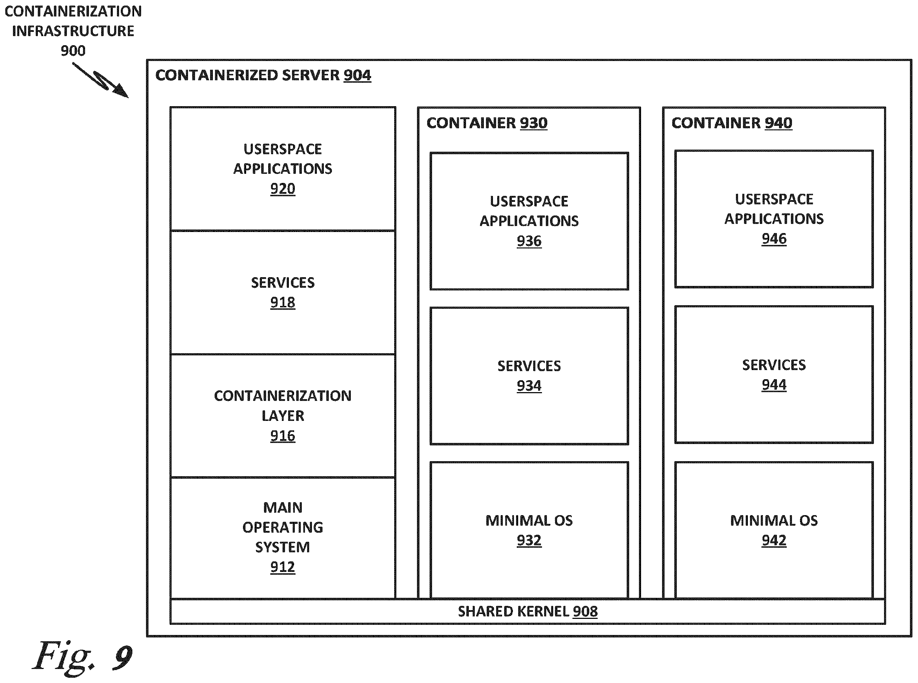

FIGURE 9 is a block diagram of selected elements of a containerization infrastructure 900. Like virtualization, containerization is a popular form of providing a guest infrastructure. Various functions described herein may be containerized, such as the cloud-based functions of FIGURE 2 above. In some cases, detection functions on a mobile device may also be containerized.

Containerization infrastructure 900 runs on a hardware platform such as containerized server 904. Containerized server 904 may provide processors, memory, one or more network interfaces, accelerators, and/or other hardware resources.

Running on containerized server 904 is a shared kernel 908. One distinction between containerization and virtualization is that containers run on a common kernel with the main operating system and with each other. In contrast, in virtualization, the processor and other hardware resources are abstracted or virtualized, and each virtual machine provides its own kernel on the virtualized hardware.

Running on shared kernel 908 is main operating system 912. Commonly, main operating system 912 is a Unix or Linux-based operating system, although containerization infrastructure is also available for other types of systems, including Microsoft Windows systems and Macintosh systems. Running on top of main operating system 912 is a containerization layer 916. For example, Docker is a popular containerization layer that runs on a number of operating systems, and relies on the Docker daemon. Newer operating systems (including Fedora Linux 32 and later) that use version 2 of the kernel control groups service (cgroups v2) feature appear to be incompatible with the Docker daemon. Thus, these systems may run with an alternative known as Podman that provides a containerization layer without a daemon.

Various factions debate the advantages and/or disadvantages of using a daemon-based containerization layer (e.g., Docker) versus one without a daemon (e.g., Podman). Such debates are outside the scope of the present specification, and when the present specification speaks of containerization, it is intended to include any containerization layer, whether it requires the use of a daemon or not.

Main operating system 912 may also provide services 918, which provide services and interprocess communication to userspace applications 920.

Services 918 and userspace applications 920 in this illustration are independent of any container.

As discussed above, a difference between containerization and virtualization is that containerization relies on a shared kernel. However, to maintain virtualization-like segregation, containers do not share interprocess communications, services, or many other resources. Some sharing of resources between containers can be approximated by permitting containers to map their internal file systems to a common mount point on the external file system. Because containers have a shared kernel with the main operating system 912, they inherit the same file and resource access permissions as those provided by shared kernel 908. For example, one popular application for containers is to run a plurality of web servers on the same physical hardware. The Docker daemon provides a shared socket, docker.sock, that is accessible by containers running under the same Docker daemon. Thus, one container can be configured to provide only a reverse proxy for mapping hypertext transfer protocol (HTTP) and hypertext transfer protocol secure (HTTPS) requests to various containers. This reverse proxy container can listen on docker.sock for newly spun up containers. When a container spins up that meets certain criteria, such as by specifying a listening port and/or virtual host, the reverse proxy can map HTTP or HTTPS requests to the specified virtual host to the designated virtual port. Thus, only the reverse proxy host may listen on ports 80 and 443, and any request to subdomain1.example.com may be directed to a virtual port on a first container, while requests to subdomain2.example.com may be directed to a virtual port on a second container.

Other than this limited sharing of files or resources, which generally is explicitly configured by an administrator of containerized server 904, the containers themselves are completely isolated from one another. However, because they share the same kernel, it is relatively easier to dynamically allocate compute resources such as CPU time and memory to the various containers. Furthermore, it is common practice to provide only a minimum set of services on a specific container, and the container does not need to include a full bootstrap loader because it shares the kernel with a containerization host (i.e. containerized server 904).

Thus, "spinning up" a container is often relatively faster than spinning up a new virtual machine that provides a similar service. Furthermore, a containerization host does not need to virtualize hardware resources, so containers access those resources natively and directly. While this provides some theoretical advantages over virtualization, modern hypervisors-especially type 1, or "bare metal," hypervisors-provide such near-native performance that this advantage may not always be realized.

In this example, containerized server 904 hosts two containers, namely container 930 and container 940.

Container 930 may include a minimal operating system 932 that runs on top of shared kernel 908. Note that a minimal operating system is provided as an illustrative example, and is not mandatory. In fact, container 930 may perform as full an operating system as is necessary or desirable. Minimal operating system 932 is used here as an example simply to illustrate that in common practice, the minimal operating system necessary to support the function of the container (which in common practice, is a single or monolithic function) is provided.

On top of minimal operating system 932, container 930 may provide one or more services 934. Finally, on top of services 934, container 930 may also provide userspace applications 936, as necessary.

Container 940 may include a minimal operating system 942 that runs on top of shared kernel 908. Note that a minimal operating system is provided as an illustrative example, and is not mandatory. In fact, container 940 may perform as full an operating system as is necessary or desirable. Minimal operating system 942 is used here as an example simply to illustrate that in common practice, the minimal operating system necessary to support the function of the container (which in common practice, is a single or monolithic function) is provided.

On top of minimal operating system 942, container 940 may provide one or more services 944. Finally, on top of services 944, container 940 may also provide userspace applications 946, as necessary.

Using containerization layer 916, containerized server 904 may run discrete containers, each one providing the minimal operating system and/or services necessary to provide a particular function. For example, containerized server 904 could include a mail server, a web server, a secure shell server, a file server, a weblog, cron services, a database server, and many other types of services. In theory, these could all be provided in a single container, but security and modularity advantages are realized by providing each of these discrete functions in a discrete container with its own minimal operating system necessary to provide those services.

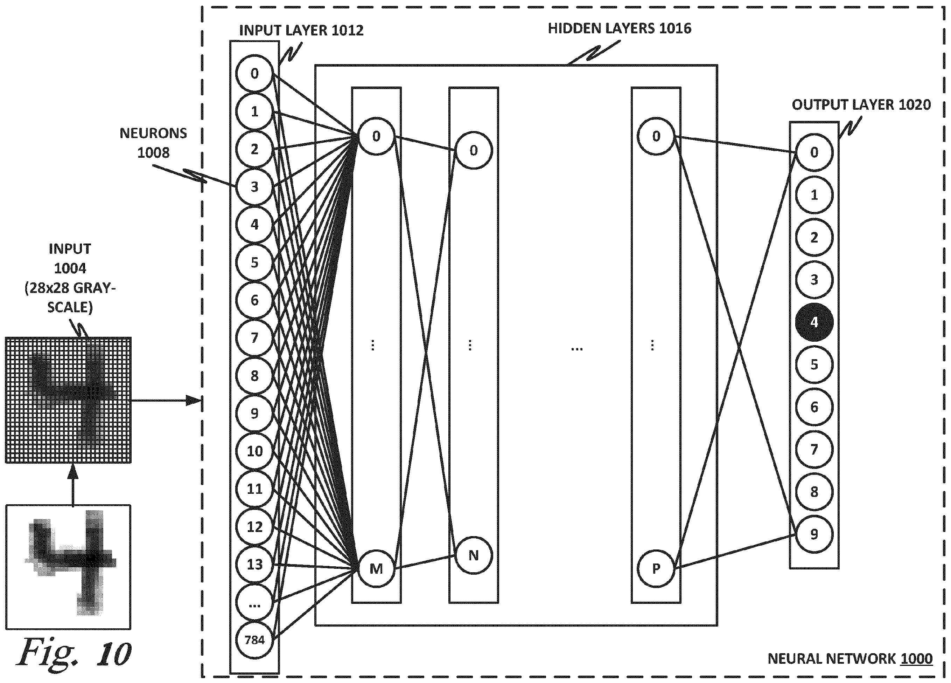

**FIGURE 10** illustrates selected elements of an artificial intelligence system or architecture. In this figure, an elementary neural network is used as a representative embodiment of an artificial intelligence or machine learning architecture or engine. This should be understood to be a nonlimiting example, and other machine learning or artificial intelligence architectures are available, including for example transformers (including general purpose transformers), symbolic learning, robotics, computer vision, pattern recognition, statistical learning, speech recognition, natural language processing, deep learning, convolutional neural networks, recurrent neural networks, object recognition and/or others. This disclosure is not intended to be an exhaustive discussion of artificial intelligence, but rather to introduce some useful vocabulary in context of a real-world application.

**FIGURE 10** illustrates machine learning according to a "textbook" problem with real-world applications. In this case, a neural network 1000 is tasked with recognizing characters. To simplify the description, neural network 1000 is tasked only with recognizing single digits in the range of 0 through 9. These are provided as an input image 1004. In this example, input image 1004 is a 28 x 28-pixel 8-bit grayscale image. In other words, input image 1004 is a square that is 28 pixels wide and 28 pixels high. Each pixel has a value between 0 and 255, with 0 representing white or no color, and 255 representing black or full color, with values in between representing various shades of gray. This provides a straightforward problem space to illustrate the operative principles of a neural network. Only selected elements of neural network 1000 are illustrated in this FIGURE, and that real-world applications may be more complex, and may include additional features, such as the use of multiple channels (e.g., for a color image, there may be three distinct channels for red, green, and blue). Additional layers of complexity or functions may be provided in a neural network, or other artificial intelligence architecture, to meet the demands of a particular problem. Indeed, the architecture here is sometimes referred to as the "Hello World" problem of machine learning, and is provided as but one example of how the machine learning or artificial intelligence functions of the present specification could be implemented.

In this case, neural network 1000 includes an input layer 1012 and an output layer 1020. In principle, input layer 1012 receives an input such as input image 1004, and at output layer 1020, neural network 1000 "lights up" a perceptron that indicates which character neural network 1000 thinks is represented by input image 1004.

Between input layer 1012 and output layer 1020 are some number of hidden layers 1016. The number of hidden layers 1016 will depend on the problem to be solved, the available compute resources, and other design factors. In general, the more hidden layers 1016, and the more neurons per hidden layer, the more accurate the neural network 1000 may become. However, adding hidden layers and neurons also increases the complexity of the neural network, and its demand on compute resources. Thus, some design skill is required to determine the appropriate number of hidden layers 1016, and how many neurons are to be represented in each hidden layer 1016.

Input layer 1012 includes, in this example, 784 "neurons" 1008. Each neuron of input layer 1012 receives information from a single pixel of input image 1004. Because input image 1004 is a 28 x 28 grayscale image, it has 784 pixels. Thus, each neuron in input layer 1012 holds 8 bits of information, taken from a pixel of input layer 1004. This 8-bit value is the "activation" value for that neuron.

Each neuron in input layer 1012 has a connection to each neuron in the first hidden layer in the network.

In this example, the first hidden layer has neurons labeled 0 through $M$. Each of the $M + 1$ neurons is connected to all 784 neurons in input layer 1012. Each neuron in hidden layer 1016 includes a kernel or transfer function, which is described in greater detail below. The kernel or transfer function determines how much "weight" to assign each connection from input layer 1012. In other words, a neuron in hidden layer 1016 may think that some pixels are more important to its function than other pixels. Based on this transfer function, each neuron computes an activation value for itself, which may be for example a decimal number between 0 and 1.

A common operation for the kernel is convolution, in which case the neural network may be referred to as a "convolutional neural network" (CNN). The case of a network with multiple hidden layers between the input layer and output layer may be referred to as a "deep neural network" (DNN). A DNN may be a CNN, and a CNN may be a DNN, but neither expressly implies the other.

Each neuron in this layer is also connected to each neuron in the next layer, which has neurons from 0 to $N$. As in the previous layer, each neuron has a transfer function that assigns a particular weight to each of its $M + 1$ connections and computes its own activation value. In this manner, values are propagated along hidden layers 1016, until they reach the last layer, which has $P + 1$ neurons labeled 0 through P. Each of these $P + 1$ neurons has a connection to each neuron in output layer 1020. Output layer 1020 includes a number of neurons known as perceptrons that compute an activation value based on their weighted connections to each neuron in the last hidden layer 1016. The final activation value computed at output layer 1020 may be thought of as a "probability" that input image 1004 is the value represented by the perceptron. For example, if neural network 1000 operates perfectly, then perceptron 4 would have a value of 1.00, while each other perceptron would have a value of 0.00. This would represent a theoretically perfect detection. In practice, detection is not generally expected to be perfect, but it is desirable for perceptron 4 to have a value close to 1, while the other perceptrons have a value close to 0.

Conceptually, neurons in the hidden layers 1016 may correspond to "features." For example, in the case of computer vision, the task of recognizing a character may be divided into recognizing features such as the loops, lines, curves, or other features that make up the character. Recognizing each loop, line, curve, etc., may be further divided into recognizing smaller elements (e.g., line or curve segments) that make up that feature. Moving through the hidden layers from left to right, it is often expected and desired that each layer recognizes the "building blocks" that make up the features for the next layer. In practice, realizing this effect is itself a nontrivial problem, and may require greater sophistication in programming and training than is fairly represented in this simplified example.

The activation value for neurons in the input layer is simply the value taken from the corresponding pixel in the bitmap. The activation value ($a$) for each neuron in succeeding layers is computed according to a transfer function, which accounts for the "strength" of each of its connections to each neuron in the previous layer. The transfer can be written as a sum of weighted inputs (i.e., the activation value ($a$) received from each neuron in the previous layer, multiplied by a weight representing the strength of the neuron-to-neuron connection ($w$)), plus a bias value.

The weights may be used, for example, to "select" a region of interest in the pixmap that corresponds to a "feature" that the neuron represents. Positive weights may be used to select the region, with a higher positive magnitude representing a greater probability that a pixel in that region (if the activation value comes from the input layer) or a subfeature (if the activation value comes from a hidden layer) corresponds to the feature. Negative weights may be used for example to actively "de-select" surrounding areas or subfeatures (e.g., to mask out lighter values on the edge), which may be used for example to clean up noise on the edge of the feature. Pixels or subfeatures far removed from the feature may have for example a weight of zero, meaning those pixels should not contribute to examination of the feature.

The bias ($b$) may be used to set a "threshold" for detecting the feature. For example, a large negative bias indicates that the "feature" should be detected only if it is strongly detected, while a large positive bias makes the feature much easier to detect.

The biased weighted sum yields a number with an arbitrary sign and magnitude. This real number can then be normalized to a final value between 0 and 1, representing (conceptually) a probability that the feature this neuron represents was detected from the inputs received from the previous layer. Normalization may include a function such as a step function, a sigmoid, a piecewise linear function, a Gaussian distribution, a linear function or regression, or the popular "rectified linear unit" (ReLU) function. In the examples of this specification, a sigmoid function notation ($\sigma$) is used by way of illustrative example, but it should be understood to stand for any normalization function or algorithm used to compute a final activation value in a neural network.

The transfer function for each neuron in a layer yields a scalar value. For example, the activation value for neuron "0" in layer "1" (the first hidden layer), may be written as:

$$a_0^{(1)} = \sigma(w_0 a_0^{(0)} + w_1 a_1^{(0)} + \cdots w_{783} a_{783}^{(0)} + b)$$

In this case, it is assumed that layer 0 (input layer 1012) has 784 neurons. Where the previous layer has "n" neurons, the function can be generalized as:

$$a_0^{(1)} = \sigma(w_0 a_0^{(0)} + w_1 a_1^{(0)} + \cdots w_n a_n^{(0)} + b)$$

A similar function is used to compute the activation value of each neuron in layer 1 (the first hidden layer), weighted with that neuron's strength of connections to each neuron in layer 0, and biased with some threshold value. As discussed above, the sigmoid function shown here is intended to stand for any function that normalizes the output to a value between 0 and 1.

The full transfer function for layer 1 (with k neurons in layer 1) may be written in matrix notation as:

$$\mathbf{a}^{(1)} = \sigma\left( \begin{bmatrix} w_{0,0} & \cdots & w_{0,n} \\ \vdots & \ddots & \vdots \\ w_{(k,0)} & \cdots & w_{k,n} \end{bmatrix} \begin{bmatrix} a_0^{(0)} \\ \vdots \\ a_n^{(0)} \end{bmatrix} + \begin{bmatrix} b_0 \\ \vdots \\ b_n \end{bmatrix} \right)$$

More compactly, the full transfer function for layer 1 can be written in vector notation as:

$$\mathbf{a}^{(1)} = \sigma(\mathbf{W}\mathbf{a}^{(0)} + \mathbf{b})$$

Neural connections and activation values are propagated throughout the hidden layers 1016 of the network in this way, until the network reaches output layer 1020. At output layer 1020, each neuron is a "bucket" or classification, with the activation value representing a probability that the input object should be classified to that perceptron. The classifications may be mutually exclusive or multinominal. For example, in the computer vision example of character recognition, a character may best be assigned only one value, or in other words, a single character is not expected to be simultaneously both a "4" and a "9." In that case, the neurons in output layer 1020 are binomial perceptrons. Ideally, only one value is above the threshold, causing the perceptron to metaphorically "light up," and that value is selected. In the case where multiple perceptrons light up, the one with the highest probability may be selected. The result is that only one value (in this case, "4") should be lit up, while the rest should be "dark." Indeed, if the neural network were theoretically perfect, the "4" neuron would have an activation value of 1.00, while each other neuron would have an activation value of 0.00.

In the case of multinominal perceptrons, more than one output may be lit up. For example, a neural network may determine that a particular document has high activation values for perceptrons corresponding to several departments, such as Accounting, Information Technology (IT), and Human Resources. On the other hand, the activation values for perceptrons for Legal, Manufacturing, and Shipping are low. In the case of multinominal classification, a threshold may be defined, and any neuron in the output layer with a probability above the threshold may be considered a "match" (e.g., the document is relevant to those departments). Those below the threshold are considered not a match (e.g., the document is not relevant to those departments).

The weights and biases of the neural network act as parameters, or "controls," wherein features in a previous layer are detected and recognized. When the neural network is first initialized, the weights and biases may be assigned randomly or pseudo-randomly. Thus, because the weights-and-biases controls are garbage, the initial output is expected to be garbage. In the case of a "supervised" learning algorithm, the network is refined by providing a "training" set, which includes objects with known results. Because the correct answer for each object is known, training sets can be used to iteratively move the weights and biases away from garbage values, and toward more useful values.

A common method for refining values includes "gradient descent" and "back-propagation." An illustrative gradient descent method includes computing a "cost" function, which measures the error in the network. For example, in the illustration, the "4" perceptron ideally has a value of "1.00," while the other perceptrons have an ideal value of "0.00." The cost function takes the difference between each output and its ideal value, squares the difference, and then takes a sum of all of the differences. Each training example will have its own computed cost. Initially, the cost function is very large, because the network does not know how to classify objects. As the network is trained and refined, the cost function value is expected to get smaller, as the weights and biases are adjusted toward more useful values.

With, for example, 100,000 training examples in play, an average cost (e.g., a mathematical mean) can be computed across all 100,00 training examples. This average cost provides a quantitative measurement of how "badly" the neural network is doing its detection job.

The cost function can thus be thought of as a single, very complicated formula, where the inputs are the parameters (weights and biases) of the network. Because the network may have thousands or even millions of parameters, the cost function has thousands or millions of input variables. The output is a single value representing a quantitative measurement of the error of the network. The cost function can be represented as:

$$C(\mathbf{w})$$

Wherein w is a vector containing all of the parameters (weights and biases) in the network. The minimum (absolute and/or local) can then be represented as a trivial calculus problem, namely:

$$\frac{dC}{dw}(\mathbf{w}) = 0$$

Solving such a problem symbolically may be prohibitive, and in some cases not even possible, even with heavy computing power available. Rather, neural networks commonly solve the minimizing problem numerically. For example, the network can compute the slope of the cost function at any given point, and then shift by some small amount depending on whether the slope is positive or negative. The magnitude of the adjustment may depend on the magnitude of the slope. For example, when the slope is large, it is expected that the local minimum is "far away," so larger adjustments are made. As the slope lessens, smaller adjustments are made to avoid badly overshooting the local minimum. In terms of multi-vector calculus, this is a gradient function of many variables:

$$-\nabla C(\mathbf{w})$$

The value of $-\nabla C$ is simply a vector of the same number of variables as w, indicating which direction is "down" for this multivariable cost function. For each value in $-\nabla C$, the sign of each scalar tells the network which "direction" the value needs to be nudged, and the magnitude of each scalar can be used to infer which values are most "important" to change.

Gradient descent involves computing the gradient function, taking a small step in the "downhill" direction of the gradient (with the magnitude of the step depending on the magnitude of the gradient), and then repeating until a local minimum has been found within a threshold.

While finding a local minimum is relatively straightforward once the value of $-\nabla C$, finding an absolutel minimum is many times harder, particularly when the function has thousands or millions of variables. Thus, common neural networks consider a local minimum to be "good enough," with adjustments possible if the local minimum yields unacceptable results. Because the cost function is ultimately an average error value over the entire training set, minimizing the cost function yields a (locally) lowest average error.

In many cases, the most difficult part of gradient descent is computing the value of $-\nabla C$. As mentioned above, computing this symbolically or exactly would be prohibitively difficult. A more practical method is to use back-propagation to numerically approximate a value for $-\nabla C$. Back-propagation may include, for example, examining an individual perceptron at the output layer, and determining an average cost value for that perceptron across the whole training set. Taking the "4" perceptron as an example, if the input image is a 4, it is desirable for the perceptron to have a value of 1.00, and for any input images that are not a 4, it is desirable to have a value of 0.00. Thus, an overall or average desired adjustment for the "4" perceptron can be computed.

However, the perceptron value is not hard-coded, but rather depends on the activation values received from the previous layer. The parameters of the perceptron itself (weights and bias) can be adjusted, but it may also be desirable to receive different activation values from the previous layer. For example, where larger activation values are received from the previous layer, the weight is multiplied by a larger value, and thus has a larger effect on the final activation value of the perceptron. The perceptron metaphorically "wishes" that certain activations from the previous layer were larger or smaller. Those wishes can be back-propagated to the previous layer neurons.

At the next layer, the neuron accounts for the wishes from the next downstream layer in determining its own preferred activation value. Again, at this layer, the activation values are not hard-coded. Each neuron can adjust its own weights and biases, and then back-propagate changes to the activation values that it wishes would occur. The back-propagation continues, layer by layer, until the weights and biases of the first hidden layer are set. This layer cannot back-propagate desired changes to the input layer, because the input layer receives activation values directly from the input image.

After a round of such nudging, the network may receive another round of training with the same or a different training data set, and the process is repeated until a local and/or global minimum value is found for the cost function.

The foregoing outlines features of several embodiments so that those skilled in the art may better understand various aspects of the present disclosure. The foregoing detailed description sets forth examples of apparatuses, methods, and systems relating to a phased fraudulent call detection in accordance with one or more embodiments of the present disclosure. Features such as structure(s), function(s), and/or characteristic(s), for example, are described with reference to one embodiment as a matter of convenience; various embodiments may be implemented with any suitable one or more of the described features.

As used throughout this specification, the phrase "an embodiment" is intended to refer to one or more embodiments. Furthermore, different uses of the phrase "an embodiment" may refer to different embodiments. The phrases "in another embodiment" or "in a different embodiment" refer to an embodiment different from the one previously described, or the same embodiment with additional features. For example, "in an embodiment, features may be present. In another embodiment, additional features may be present." The foregoing example could first refer to an embodiment with features A, B, and C, while the second could refer to an embodiment with features A, B, C, and D, with features, A, B, and D, with features, D, E, and F, or any other variation.

In the foregoing description, various aspects of the illustrative implementations may be described using terms commonly employed by those skilled in the art to convey the substance of their work to others skilled in the art. It will be apparent to those skilled in the art that the embodiments disclosed herein may be practiced with only some of the described aspects. For purposes of explanation, specific numbers, materials, and configurations are set forth to provide a thorough understanding of the illustrative implementations. In some cases, the embodiments disclosed may be practiced without specific details. In other instances, well-known features are omitted or simplified so as not to obscure the illustrated embodiments.

For the purposes of the present disclosure and the appended claims, the article "a" refers to one or more of an item. The phrase "A or B" is intended to encompass the "inclusive or," e.g., A, B, or (A and B). "A and/or B" means A, B, or (A and B). For the purposes of the present disclosure, the phrase "A, B, and/or C" means A, B, C, (A and B), (A and C), (B and C), or (A, B, and C).

The embodiments disclosed can readily be used as the basis for designing or modifying other processes and structures to carry out the teachings of the present specification. Any equivalent constructions to those disclosed do not depart from the spirit and scope of the present disclosure. Design considerations may result in substitute arrangements, design choices, device possibilities, hardware configurations, software implementations, and equipment options.

As used throughout this specification, a "memory" is expressly intended to include both a volatile memory and a nonvolatile memory. Thus, for example, an "engine" as described above could include instructions encoded within a volatile or nonvolatile memory that, when executed, instruct a processor to perform the operations of any of the methods or procedures disclosed herein. It is expressly intended that this configuration reads on a computing apparatus "sitting on a shelf" in a non-operational state. For example, in this example, the "memory" could include one or more tangible, nontransitory computer-readable storage media that contain stored instructions. These instructions, in conjunction with the hardware platform (including a processor) on which they are stored may constitute a computing apparatus.

In other embodiments, a computing apparatus may also read on an operating device. For example, in this configuration, the "memory" could include a volatile or run-time memory (e.g., RAM), where instructions have already been loaded. These instructions, when fetched by the processor and executed, may provide methods or procedures as described herein.

In yet another embodiment, there may be one or more tangible, nontransitory computer-readable storage media having stored thereon executable instructions that, when executed, cause a hardware platform or other computing system, to carry out a method or procedure. For example, the instructions could be executable object code, including software instructions executable by a processor. The one or more tangible, nontransitory computer-readable storage media could include, by way of illustrative and nonlimiting example, a magnetic media (e.g., hard drive), a flash memory, a ROM, optical media (e.g., CD, DVD, Blu-Ray), nonvolatile random-access memory (NVRAM), nonvolatile memory (NVM) (e.g., Intel 3D Xpoint), or other nontransitory memory.

There are also provided herein certain methods, illustrated for example in flow charts and/or signal flow diagrams. The order or operations disclosed in these methods discloses one illustrative ordering that may be used in some embodiments, but this ordering is not intended to be restrictive, unless expressly stated otherwise. In other embodiments, the operations may be carried out in other logical orders. In general, one operation should be deemed to necessarily precede another only if the first operation provides a result required for the second operation to execute. Furthermore, the sequence of operations itself should be understood to be a nonlimiting example. In appropriate embodiments, some operations may be omitted as unnecessary or undesirable. In the same or in different embodiments, other operations not shown may be included in the method to provide additional results.

In certain embodiments, some of the components illustrated herein may be omitted or consolidated. In a general sense, the arrangements depicted in the FIGURES may be more logical in their representations, whereas a physical architecture may include various permutations, combinations, and/or hybrids of these elements.

With the numerous examples provided herein, interaction may be described in terms of two, three, four, or more electrical components. These descriptions are provided for purposes of clarity and example only. Any of the illustrated components, modules, and elements of the FIGURES may be combined in various configurations, all of which fall within the scope of this specification.

In certain cases, it may be easier to describe one or more functionalities by disclosing only selected elements. Such elements are selected to illustrate specific information to facilitate the description. The inclusion of an element in the FIGURES is not intended to imply that the element must appear in the disclosure, as claimed, and the exclusion of certain elements from the FIGURES is not intended to imply that the element is to be excluded from the disclosure as claimed. Similarly, any methods or flows illustrated herein are provided by way of illustration only. Inclusion or exclusion of operations in such methods or flows should be understood the same as inclusion or exclusion of other elements as described in this paragraph. Where operations are illustrated in a particular order, the order is a nonlimiting example only. Unless expressly specified, the order of operations may be altered to suit a particular embodiment.

Other changes, substitutions, variations, alterations, and modifications will be apparent to those skilled in the art. All such changes, substitutions, variations, alterations, and modifications fall within the scope of this specification.

To aid the United States Patent and Trademark Office (USPTO) and, any readers of any patent or publication flowing from this specification, the Applicant: (a) does not intend any of the appended claims to invoke paragraph (f) of 35 U.S.C. section 112, or its equivalent, as it exists on the date of the filing hereof unless the words "means for" or "steps for" are specifically used in the particular claims; and (b) does not intend, by any statement in the specification, to limit this disclosure in any way that is not otherwise expressly reflected in the appended claims, as originally presented or as amended.

Examples

1. A computer-implemented method of detecting fraudulent activity on a user device, comprising:

while a voice call is ongoing on the user device, the voice call between a user of the user device and a second party, segmenting the voice call into discrete segments;

analyzing respective discrete segments and assigning, to the discrete segments, per-segment weighted fraud scores, wherein a weighted fraud score for a segment accounts for a weighted fraud score of a previous segment;

determining, based on the per-segment weighted fraud scores, that the voice call is likely a fraudulent call; and

after determining that the voice call is likely a fraudulent call, providing a human-perceptible warning to the user before the user discloses sensitive user data.

2. The method of example 1, wherein the human-perceptible warning is audible, visual, or haptic.

3. The method of example 1, wherein the voice call is an incoming voice call.

4. The method of example 1, wherein the voice call is from an unknown phone number.

5. The method of example 1, wherein the voice call is from a known phone number in an electronic address book or contact list of the user.

6. The method of example 1, wherein the discrete segments are of equal length to one another.

7. The method of example 1, wherein the discrete segments are of variable length.

8. The method of example 7, wherein the variable length is determined by breaks in speech.

9. The method of example 1, wherein analyzing a discrete segment comprises converting the discrete segment to text, and analyzing the text via a large language model (LLM) to identify textual indicia of deceit.

10. The method of example 1, wherein analyzing a discrete segment comprises analyzing vocal cues of the second party to detect fake voice indicators.

11. The method of example 1, wherein analyzing a discrete segment comprises analyzing vocal cues of the user and the second party to identify indicia of heightened emotion.

12. The method of example 1, wherein determining that the voice call is likely a fraudulent call comprises identifying a multi-phase call structure common to fraudulent calls.

13. The method of example 12, wherein the multi-phase call structure comprises an introduction and purpose phase, a build credibility phase, an apply pressure phase, and a payoff phase.

14. The method of example 1, wherein the sensitive user data comprises personally identifying information (PII).

15. The method of example 1, wherein the sensitive user data comprises user credentials.

16. The method of example 1, wherein the sensitive user data comprises account data.

17. The method of example 1, wherein the sensitive user data comprises money access.

18. An apparatus comprising means for performing the method of any of examples 1 - 17.

19. The apparatus of example 18, wherein the means for performing the method comprises a processor and a memory.

20. The apparatus of example 19, wherein the memory comprises machine-readable instructions that, when executed, cause the apparatus to perform the method of any of claims 1 - 17.

21. The apparatus of any of example 18 - 20, wherein the apparatus is a computing system.

22. At least one computer readable medium comprising instructions that, when executed, implement a method or realize an apparatus as claimed in any of examples 1 - 21.

23. One or more tangible, nontransitory computer-readable storage media having stored thereon executable instructions to instruct a processor circuit to:

while a voice call is ongoing on a user device, the voice call between a user of the user device and a second party, segment the voice call into discrete segments;

analyze respective discrete segments and assigning, to the discrete segments, per-segment weighted fraud scores, wherein a weighted fraud score for a segment accounts for a weighted fraud score of a previous segment;

determine, based on the per-segment weighted fraud scores, that the voice call is likely a fraudulent call; and

after determining that the voice call is likely a fraudulent call, provide a human-perceptible warning to the user before the user discloses sensitive user data.

24. The one or more tangible, nontransitory computer-readable media of example 23, wherein the human-perceptible warning is audible, visual, or haptic

25. The one or more tangible, nontransitory computer-readable media of example 23, wherein the voice call is an incoming voice call.

26. The one or more tangible, nontransitory computer-readable media of example 23, wherein the voice call is from an unknown phone number.

27. The one or more tangible, nontransitory computer-readable media of example 23, wherein the voice call is from a known phone number in an electronic address book or contact list of the user.

28. The one or more tangible, nontransitory computer-readable media of example 23, wherein the discrete segments are of equal length to one another.

29. The one or more tangible, nontransitory computer-readable media of example 23, wherein the discrete segments are of variable length.

30. The one or more tangible, nontransitory computer-readable media of example 29, wherein the variable length is determined by breaks in speech.

31. The one or more tangible, nontransitory computer-readable media of example 23, wherein analyzing a discrete segment comprises converting the segment to text, and analyzing the text via a large language model (LLM) to identify textual indicia of deceit.

32. The one or more tangible, nontransitory computer-readable media of example 23, wherein analyzing a discrete segment comprises analyzing vocal cues of the second party to detect fake voice indicators.

33. The one or more tangible, nontransitory computer-readable media of example 23, wherein analyzing a discrete segment comprises analyzing vocal cues of the user and the second party to identify indicia of heightened emotion.

34. The one or more tangible, nontransitory computer-readable media of example 23, wherein determining that the voice call is likely a fraudulent call comprises identifying a multi-phase call structure common to fraudulent calls.

35. The one or more tangible, nontransitory computer-readable media of example 34, wherein the multi-phase call structure comprises an introduction and purpose phase, a build credibility phase, an apply pressure phase, and a payoff phase.

36. The one or more tangible, nontransitory computer-readable media of example 23, wherein the sensitive user data comprises personally identifying information (PII).

37. The one or more tangible, nontransitory computer-readable media of example 23, wherein the sensitive user data comprises user credentials.

38. The one or more tangible, nontransitory computer-readable media of example 23, wherein the sensitive user data comprises account data.

39. The one or more tangible, nontransitory computer-readable media of example 23, wherein the sensitive user data comprises money access.

40. A computing apparatus, comprising:

a hardware platform comprising a processor circuit and a memory; and

instructions encoded within the memory to instruct the processor circuit to:

while a voice call is ongoing on a user device, the voice call between a user of the user device and a second party, segment the voice call into discrete segments;

analyze respective discrete segments and assigning, to the discrete segments, per-segment weighted fraud scores, wherein a weighted fraud score for a segment accounts for a weighted fraud score of a previous segment;

determine, based on the per-segment weighted fraud scores, that the voice call is likely a fraudulent call; and

after determining that the voice call is likely a fraudulent call, provide a human-perceptible warning to the user before the user discloses sensitive user data.

41. The computing apparatus of example 40, wherein the human-perceptible warning is audible, visual, or haptic

42. The computing apparatus of example 40, wherein the voice call is an incoming voice call.

43. The computing apparatus of example 40, wherein the voice call is from an unknown phone number.

44. The computing apparatus of example 40, wherein the voice call is from a known phone number in an electronic address book or contact list of the user.

45. The computing apparatus of example 40, wherein the discrete segments are of equal length to one another.

46. The computing apparatus of example 40, wherein the discrete segments are of variable length.

47. The computing apparatus of example 46, wherein the variable length is determined by breaks in speech.

48. The computing apparatus of example 40, wherein analyzing a discrete segment comprises converting the segment to text, and analyzing the text via a large language model (LLM) to identify textual indicia of deceit.

49. The computing apparatus of example 40, wherein analyzing a discrete segment comprises analyzing vocal cues of the second party to detect fake voice indicators.

50. The computing apparatus of example 40, wherein analyzing a discrete segment comprises analyzing vocal cues of the user and the second party to identify indicia of heightened emotion.

51. The computing apparatus of example 40, wherein determining that the voice call is likely a fraudulent call comprises identifying a multi-phase call structure common to fraudulent calls.

52. The computing apparatus of example 51, wherein the multi-phase call structure comprises an introduction and purpose phase, a build credibility phase, an apply pressure phase, and a payoff phase.

53. The computing apparatus of example 40, wherein the sensitive user data comprises personally identifying information (PII).

54. The computing apparatus of example 40, wherein the sensitive user data comprises user credentials.

55. The computing apparatus of example 40, wherein the sensitive user data comprises account data.

56. The computing apparatus of example 40, wherein the sensitive user data comprises money access.

57. The computing apparatus of any of examples 40 - 56, wherein the computing apparatus is a desktop computer.

58. The computing apparatus of any of examples 40 - 56, wherein the computing apparatus is a workstation.

59. The computing apparatus of any of examples 40 - 56, wherein the computing apparatus is a laptop computer.

60. The computing apparatus of any of examples 40 - 56, wherein the computing apparatus is a notebook computer.

61. The computing apparatus of any of examples 40 - 56, wherein the computing apparatus is a netbook.

62. The computing apparatus of any of examples 40 - 56, wherein the computing apparatus is a tablet computer.

63. The computing apparatus of any of examples 40 - 56, wherein the computing apparatus is a convertible tablet computer.

64. The computing apparatus of any of examples 40 - 56, wherein the computing apparatus is a smart phone.

65. The computing apparatus of any of examples 40 - 56, wherein the computing apparatus is an Android phone.

66. The computing apparatus of any of examples 40 - 56, wherein the computing apparatus is an iPhone.

67. The computing apparatus of any of examples 40 - 56, wherein the computing apparatus is a Windows phone.

68. The computing apparatus of any of examples 40 - 56, wherein the computing apparatus is a server.

69. The computing apparatus of example 68, further comprising a guest infrastructure to realize server functions.

70. The computing apparatus of example 69, wherein the guest infrastructure comprises virtualization.

71. The computing apparatus of example 69, wherein the guest infrastructure comprises containerization.

72. The computing apparatus of any of examples 40 - 56, wherein the computing apparatus is a gateway.

**Claims**

1. A computer-implemented method of detecting fraudulent activity on a user device, comprising:

   while a voice call is ongoing on the user device, the voice call between a user of the user device and a second party, segmenting the voice call into discrete segments;
   analyzing respective discrete segments and assigning, to the discrete segments, per-segment weighted fraud scores, wherein a weighted fraud score for a segment accounts for a weighted fraud score of a previous segment;
   determining, based on the per-segment weighted fraud scores, that the voice call is likely a fraudulent call; and
   after determining that the voice call is likely a fraudulent call, providing a human-perceptible warning to the user before the user discloses sensitive user data.

2. The method of claim 1, wherein the human-perceptible warning is audible, visual, or haptic.

3. The method of claim 1 or 2, wherein the voice call is an incoming voice call.

4. The method of one of the preceding claims, wherein the voice call is from an unknown phone number.

5. The method of one of the preceding claims, wherein the voice call is from a known phone number in an electronic address book or contact list of the user.

6. The method of one of the preceding claims, wherein the discrete segments are of equal length to one another.

7. The method of one of the preceding claims, wherein the discrete segments are of variable length.

8. The method of one of the preceding claims, wherein analyzing a discrete segment comprises converting the discrete segment to text, and analyzing the text via a large language model (LLM) to identify textual indicia of deceit.

9. The method of one of the preceding claims, wherein analyzing a discrete segment comprises analyzing vocal cues of the second party to detect fake voice indicators.

10. The method of one of the preceding claims, wherein analyzing a discrete segment comprises analyzing vocal cues of the user and the second party to identify indicia of heightened emotion.

11. The method of one of the preceding claims, wherein determining that the voice call is likely a fraudulent call comprises identifying a multi-phase call structure common to fraudulent calls.

12. The method of one of the preceding claims, wherein the sensitive user data comprises personally identifying information (PII), user credentials, account data, or money access.

13. An apparatus comprising means for performing the method of any of claims 1 - 12.

14. The apparatus of claim 13, wherein the means for performing the method comprise a processor and a memory.

15. The apparatus of claim 14, wherein the memory comprises machine-readable instructions that, when executed, cause the apparatus to perform the method of any of claims 1 - 12.

CONSUMER PROTECTION
ECOSYSTEM
100

MOBILE PHONE 128

CONSUMER
124

USER CREDENTIALS
AND PII
132

SERVICE
PROVIDERS
136

PUBLIC TELEPHONY
NETWORK 120

PUBLIC INTERNET
140

FRAUDULENT CALL CENTER 104

AUTO-
DIALER
108

FRAUD
OPERATOR
112

SCRIPT
116

EP 4 679 876 A1

*Fig. 1*

**MOBILE DEVICE 202**

**HARDWARE PLATFORM 230**

MOBILE OS 232

STT ENGINE 248

SECURITY AGENT 270

TELEPHONY STACK 236

SPEAKDER 236

PRE-TRAINED DNN 252

DIALER 240

MICROPHONE 260

USER INTERFACE 264

IP STACK 244

HAPTIC DRIVER 268

200

**CLOUD SERVICE 208**

DNN 212

LARGE TRAINING SET 216

PROMPT 220

LLM 224

*Fig. 2*

EP 4 679 876 A1

*Fig. 3*

400

ESTABLISH TRUST    BUILD RAPPORT

PERSONAL INTRODUCTION
FALSE BUSINESS/ASSOC.
ALLEGED CALL PURPOSE

PHASE 1: INTRODUCTION AND PURPOSE 404

PHASE 2: BUILD CREDIBILITY 408

PHASE 4: PAYOFF 416

PHASE 3: APPLY PRESSURE 412

FABRICATE SITAUTION/PROBLEM
PROVIDE FALSE INFORMATION
LEVERAGE SYMPATHY, URGENCY, OR GREED

COLLECT MONEY, ACCOUNT INFO., OR PII

*Fig. 4*

*Fig. 5*

START

504
CHECK NUMBER AGAINST CROWD-SOURCED DATABASE

500

510
FRAUDULENT?

592
BLOCK OR WARN

508
SEGMENT CALL

512
INFER AND SCORE INTENT

516
SCORE VOICE (GENUINE OR FAKE)

520
SCORE INTENT

524
DETERMINE PHASE

528
CALCULATE COMPOSITE SCORE

532
UPDATE GUI

536
CALL DONE?

590
DONE

Fig. 6

EP 4 679 876 A1

**SoC 700**

| | |
|---|---|
| MIPI | HDMI |

**CORE0 702-1**

**CORE 1 702-2**

**L2 CACHE CONTROLLER 704**

**BUS INTERFACE UNIT 714**

**L2 CACHE 716**

**GPU 706**

**VIDEO CODEC 708**

**LCD VIDEO I/F 710**

**INTERCONNECT 712**

| SIM I/F 718 | BOOT ROM 720 | SDRAM CONT 722 | FLASH CONT 724 | SPI DIRECTOR 728 |
|---|---|---|---|---|

**POWER CONTROLLER 730**

**DRAM 732**

**FLASH 734**

*Fig. 7*

*Fig. 8*

Fig. 9

*Fig. 10*

Europäisches
Patentamt
European
Patent Office
Office européen
des brevets

## EUROPEAN SEARCH REPORT

**Application Number**

EP 25 18 8527

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 110 738 B1 (SAWANT VIPUL [IN] ET AL) 23 October 2018 (2018-10-23) * column 3, line 60 - column 14, line 21 * * figures 1-6 * ----- | 1-15 | INV. H04W12/128 H04M15/00 H04M3/436 |
| A | US 2024/187517 A1 (JOSHI HARSHA RAMAMURTHY [IN] ET AL) 6 June 2024 (2024-06-06) * paragraph [0019] - paragraph [0184] * * figures 1-9 * ----- | 1-15 | |
| A | US 2024/040035 A1 (DROPULJIC BRANIMIR [HR] ET AL) 1 February 2024 (2024-02-01) * paragraph [0026] - paragraph [0115] * * figures 1-6B * ----- | 1-15 | |
| A | US 2023/262160 A1 (TRIVEDI DWIJ [US] ET AL) 17 August 2023 (2023-08-17) * paragraph [0028] - paragraph [0113] * * figures 1-11 * ----- | 1-15 | |
| A | WO 2022/006421 A1 (PINDROP SECURITY INC [US]) 6 January 2022 (2022-01-06) * paragraph [0029] - paragraph [0194] * * figures 1-10 * ----- | 1-15 | TECHNICAL FIELDS SEARCHED (IPC) H04W H04M |

The present search report has been drawn up for all claims

| Place of search | Date of completion of the search | Examiner |
|---|---|---|
| Munich | 31 October 2025 | Ghomrasseni, Z |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...........................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 18 8527

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2025

| Patent document cited in search report | | Publication date | Patent family member(s) | | Publication date |
|---|---|---|---|---|---|
| US 10110738 | B1 | 23-10-2018 | NONE | | |
| US 2024187517 | A1 | 06-06-2024 | US | 2022377171 A1 | 24-11-2022 |
| | | | US | 2024187517 A1 | 06-06-2024 |
| | | | US | 2025323996 A1 | 16-10-2025 |
| US 2024040035 | A1 | 01-02-2024 | US | 2024040035 A1 | 01-02-2024 |
| | | | WO | 2024026033 A1 | 01-02-2024 |
| US 2023262160 | A1 | 17-08-2023 | NONE | | |
| WO 2022006421 | A1 | 06-01-2022 | US | 2022006899 A1 | 06-01-2022 |
| | | | US | 2024214490 A1 | 27-06-2024 |
| | | | US | 2025280067 A1 | 04-09-2025 |
| | | | WO | 2022006421 A1 | 06-01-2022 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202441052535